# EUROPEAN PATENT SPECIFICATION

(11) **EP 4 382 818 B1**
(45) Date of publication and mention of the grant of the patent: **03.09.2025**
(21) Application number: 23212531.0
(22) Date of filing: 28.11.2023
(51) Int. Cl.: F24D 17/00, F24D 17/02, F24D 19/10, F24H 1/18, F24H 4/04, F24H 9/13, F24H 9/20, F24H 15/174, F24H 15/215, F24H 15/219, F24H 15/225, F24H 15/31, F24H 15/335, F24H 15/37, F24H 15/375, F24H 15/429

(54) **STORAGE WATER HEATER EQUIPPED WITH AT LEAST ONE AUXILIARY HEATER AND A BY-PASS DUCT**
HEISSWASSERSPEICHER, DER MIT MINDESTENS EINEM ZUSATZHEIZER UND EINEM BYPASSKANAL AUSGESTATTET IST
CHAUFFE-EAU À ACCUMULATION ÉQUIPÉ D'AU MOINS UN CHAUFFE-EAU AUXILIAIRE ET D'UN CONDUIT DE DÉRIVATION

(30) Priority: 06.12.2022 IT 202200025026
(43) Date of publication of application: 12.06.2024
(73) Proprietor: Ariston S.p.A., 60044 Fabriano (AN) (IT)
(72) Inventor: MARRA, Lorenzo, 60027 Osimo (AN) (IT); CANESTRARI, Paolo, 60044 Fabriano (AN) (IT); CECCACCI, Lorenzo, 60015 Falconara Marittima (AN) (IT); CONTI, Alessandro, 60044 Fabriano (AN) (IT); D'ANDREA, Luca, 60044 Fabriano (AN) (IT)
(74) Representative: Mar.Bre S.r.l.

(56) References cited:
- EP-A1- 2 453 334
- WO-A1-2022/168050
- WO-A2-2006/111755
- DE-A1- 102010 034 008
- ES-A1- 2 312 293
- US-A1- 2011 132 279

## Description

The object of the present invention is a storage water heater used for the production of domestic hot water.

More in detail, the present invention refers to a storage water heater provided with at least a main heater and at least a additional/auxiliary heater.

Even more in detail, the present invention refers to a storage water heater heated by at least a main heater and provided with at least a first and/or second additional/auxiliary heater.

A further object of the present invention is a management method of a storage water heater and of the heating elements thereof.

Storage water heaters are currently known provided with a main and additional heater arranged within the storage tank of the water to be heated.

Generally, said additional heater comprises one or more electric resistances which, by conduction, heat the water wherein they are immersed.

Such type of water heater presents different drawbacks.

The main one is linked to the fact that the contact with water causes the electrical resistance to have a gradual deterioration and loss of efficiency due to the formation of limescale or the like.

During the use, therefore, the electrical resistance requires maintenance or a replacement thereof, increasing the management costs of the same water heater.

Another problem of the current water heaters, concerns the overall dimensions and size thereof strictly related to the shape and capacity (volume) of the tank, but also to the overall dimensions of the heating elements provided for by the same water heater.

Currently, water heaters that are compact and with small overall dimensions are preferred and such preference is not always met by the water heaters offered on the market.

This is due to the type of heating elements installed by the water heater.

For example, the heat pumps, which are more and more applied in the sector of the storage water heaters, have significant overall dimensions due to the presence of heat exchangers (evaporator/condenser) which require certain heat exchange surfaces and the presence of essential components, such as for example compressors or others, in order to carry out their function.

The water heaters currently available, therefore, do not fully meet the needs of the market which requires small overall dimensions and low management/maintenance costs.

A storage water heater according to the preamble of claim 1 is known from WO 2006/111755 A2.

The aim of the present invention is to obviate such kind of drawbacks by providing a storage water heater or the like, preferably for the production of domestic hot water, able to keep low the overall dimensions.

A further object of the present invention, at least for one or more executive variants, is to provide a storage water heater or the like provided with at least a main heater and at least a additional/auxiliary heater.

A further object of the present invention, at least for one or more executive variants, is to provide a management method of a storage water heater and of the heating elements thereof.

These and other objects, which shall appear clear hereinafter, are achieved with a storage water heater and relative management method, according to claim 1.

Other objects may also be achieved by means of the additional features of the dependent claims.

Further features of the present invention shall be better highlighted by the following description of a preferred embodiment, according with the patent claims and illustrated, purely by way of a non-limiting example, in the accompanying drawing tables, in which:
- Figure 1 shows a schematic section view of the water heater of the present invention according to a first possible executive variant, where said water heater is equipped with only one auxiliary heating device which acts as a pre-heater;
- Figure 2 shows the path of the water during a withdrawal of hot water from the water heater of Figure 1 with closed by-pass duct and open inlet duct;
- Figure 3 shows a possible path of the water during a withdrawal of hot water from the water heater of Figure 1 with an open by-pass duct and a closed inlet duct;
- Figure 4 shows a block diagram of a possible management method of the water heater of Figure 1;
- Figure 5 shows a schematic section view of the water heater of the present invention according to a second possible executive variant, where said water heater is equipped with at least a auxiliary heating device which acts as a pre-heater and with at least a auxiliary heating device which acts as a post-heater;
- Figure 6 shows the path of the water during a withdrawal of hot water from the water heater of Figure 5 with closed by-pass duct and open inlet duct;
- Figure 7 shows a possible path of the water during a withdrawal of hot water from the water heater of Figure 5 with an open by-pass duct and a closed inlet duct;
- Figure 8 shows a block diagram of a possible management method of the water heater of Figure 5;
- Figure 9 shows a schematic section view of the water heater of the present invention according to a third possible executive variant, where said water heater is equipped with at least a auxiliary heating device which acts as a pre-heater, at least an auxiliary heating device which acts as a post-heater and with an adjustable diverter means;
- Figure 10 shows a possible path of the water during a withdrawal of hot water from the water heater of Figure 9;
- Figure 11 shows a block diagram of a possible management method of the water heater of Figure 9;
- Figure 12 shows a schematic section view of the water heater of the present invention according to a fourth possible executive variant, where said water heater is equipped with at least an auxiliary heating device which acts as a pre-heater arranged along said by-pass duct and with an adjustable diverter means;
- Figure 13 shows a possible path of the water during a withdrawal of hot water from the water heater of Figure 12;
- Figure 14 shows a block diagram of a possible management method of the water heater of Figure 12.

The features of a storage water heater or the like according to the present invention and of the relative management method are now described using the references contained in the figures.

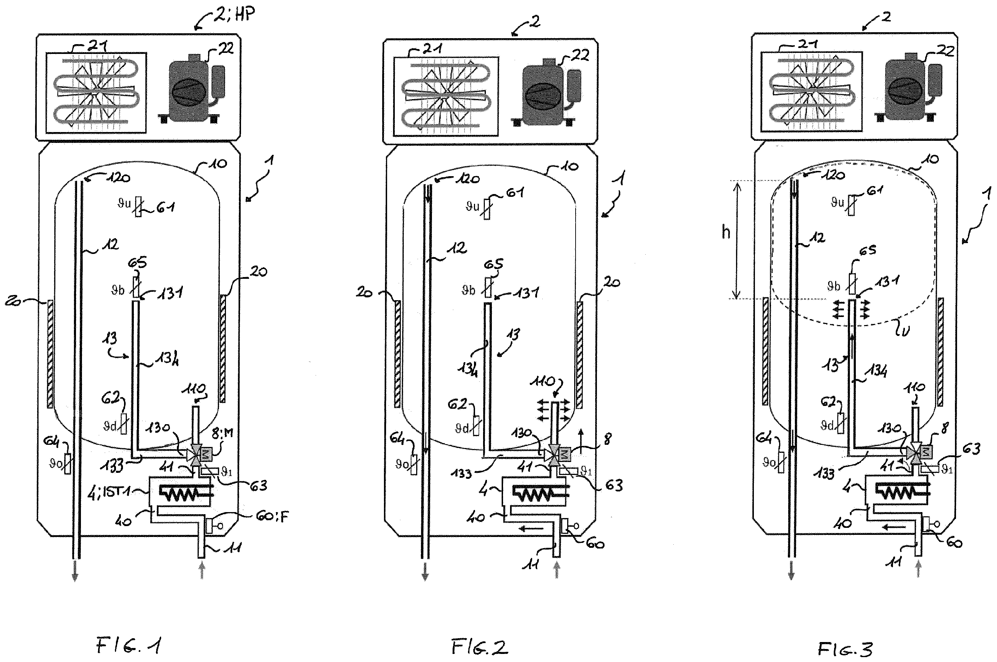

The parameters and functions/conditions and the respective references used hereinafter in the description are listed below:
- **ϑu**: storage water temperature in the proximity of the top zone of the tank, substantially that adjacent to the upper cap (or dome) of the same tank;
- **ϑd**: storage water temperature in the proximity of the lower zone of the tank, substantially that adjacent to the lower cap of the same tank;
- **ϑb**: storage water temperature in the proximity of the outlet of the by-pass duct;
- **ϑo***: "temperature out"*, i.e. the temperature of the water exiting the tank of the water heater;
- **ϑ1:** *"temperature in"*, i.e. the temperature of the storage make-up water, generally withdrawn from the water network, following a withdrawal;
- **ϑ2*****:** "temperature heat"*, optional parameter identifying the value of the temperature of the water at the outlet of the post-heater, when provided, of the water heater; ϑ2 allows monitoring the value of the temperature of the water supplied by the water heater by checking whether it respects or not the comfort temperature Tc;
- **Tm**: the average temperature of the water of the storage and may be calculated as: *Tm=a*ϑu + b*ϑd,* where *"a"* e *"b"* are percentage values that act as weights in order to carry out a weighted average and may depend on, for example, the capacity of the tank and/or entity of the withdrawal (or tapping) and/or on the reactivity and readiness degree that shall be given to the water heater;
- **Tc**: comfort temperature, temperature that may be set by the manufacturer and/or installer and/or user below which the storage water may not be supplied;
- **Tset:** set point temperature, temperature at which the storage may be heated/maintained and may be set by the manufacturer and/or installer and/or user;
- **X:** is a hysteresis value and may be used to avoid frequent and subsequent re-ignitions of the main heating device; it is generally set by the manufacturer and/or installer based on the type of water heater and/or the type and shape of the plant or the like and may vary between 3÷12, preferably between 5÷8 (dimensionless quantity);
- **BOOST:** additional function of the water heater which allows for an additional heating, compared to that provided via the main heating device, at least of the inlet water in the water heater via at least a of the auxiliary heating devices provided by said water heater; the BOOST function may be set by default and therefore always implemented by the water heater, or a function selectable at discretion by the user or by the installer as needed (therefore, it may be voluntarily deactivated if not desired);
- **FL:** represents a reference value for the amount of make-up water flow so as to be able to determine whether the withdrawal in progress is a small withdrawal or a large withdrawal. The withdrawal methods are preferably referred to the EN 16147 standard which describes the product performance test procedure, and defines the type of withdrawal based on the energy content of the water withdrawn from the storage tank; for example, a withdrawal is defined as small when it has an energy content less than 1.4 kWh;
- **h:** distance between the outlet of the by-pass duct and the inlet of the outlet duct of the water heater;
- **v:** represents a portion of the volume of the storage which substantially develops between the outlet of the by-pass duct and the inlet of the outlet duct, said volume "v" being identified/represented in the Figures 3, 7, 10 and 13 via a dashed line.

It should be noted that the arrows shown in the accompanying figures essentially indicate the path of the water entering and exiting the water heater according to the present invention.

The term storage water heater is herein to be understood as any device capable of heating water in a storage tank, in particular domestic hot water for hygienic uses, until reaching a certain temperature herein defined as the set-point temperature T. set.

As clearly shown in the accompanying figures, 1 indicates, as a whole, the storage water heater 1 according to the present invention, hereinafter referred to as only water heater 1, for clarity of description.

Generally, said water heater 1 may comprise at least a heating device, at least a storage tank 10 wherein water is stored and heated, at least a control and management unit capable of controlling said at least a heating device, at least a inlet duct 11 through which water may be introduced into the tank 10, at least a outlet duct 12 through which water may be sent/withdrawn from the tank 10, said inlet ducts 11 and 12 being in fluid communication with said tank 10.

The heating device may be of the electric type, i.e. comprising at least a electric device such as for example electric resistances or the like, or of the heat pump type, a variant illustrated by way of a non-limiting example in the accompanying figures, solar energy, gas, geothermal or the like or possible combinations thereof. Generally, in a storage water heater the water inside the storage tank has a stratification according to the temperature, said stratification being due to the heating process caused by the heating elements and by the density of the water.

In fact, the hottest water tends to migrate and settle in the top part of the tank, while the colder water tends to settle in the lower part of the same tank.

According to a preferred variant, the outlet section 110 of the inlet duct 11 is preferably positioned in the proximity of the lower zone of the said tank 10, while the inlet section 120 of the outlet duct 12 is preferably positioned in the proximity of the median or, even more preferably, top zone of the said tank 10.

During the operation of the water heater 1, such arrangement determines a water make-up, generally from the water network, in the lower area of the tank 10 and a withdrawal of hot water in the upper zone thereof, thus keeping the stratification of the water based on the temperature thereof and essentially guaranteeing the withdrawal and supply of hot water.

According to a preferred variant, said water heater 1 comprises at least two heating devices, of which preferably at least a main and at least a auxiliary.

In general, "main" heating device refers to as a device which is designed to heat water in normal/standard conditions, while "auxiliary" is to be understood as a device designed to heat water in particular conditions, for example when it is preferable to have a heat source in addition to the main one.

Of said at least two heating devices may be identified:
- at least a first heating device, herein identified as "main", which may comprise a heat pump or means using the solar or geothermal energy or the like; and
- at least a second heating device, herein identified as "auxiliary", which may comprise heaters, preferably of the instantaneous type, comprising, for example, electric resistances or the like.

Preferably, according with a possible executive variant, shown by way of a non-limiting example in the accompanying figures:
- said at least a first main heating device comprises a heat pump 2 provided with at least a compressor 22, a evaporator 21, a lamination member and a condenser 20 suitably arranged so as to heat the water of the storage, for example, according to a possible executive variant, said condenser may be arranged in contact with/around the walls of the tank 10 so as to be able to cooperate, at least thermally, therewith, and heat the water contained in the same tank 10;
- said at least a second 4 auxiliary heating device comprises at least a electric heater and may be arranged externally to the storage tank 10.

Preferably, according to possible executive variants, said second device 4 may be installed along the inlet duct 11, so as to act as a pre-heater, i.e., be able to heat the make-up water entering the tank 10, hereinafter referred to as pre-heater 4.

According to a possible embodiment variant, provided by way of a non-limiting example, said water heater 1 may further comprise at least a third heating device 5, herein identified as "auxiliary", which may comprise heaters, preferably of the instantaneous type, comprising, for example, electric heaters, electric resistances or the like.

Said third auxiliary device 5 is preferably installed along the outlet duct 12 so as to be able to act as a post-heater, i.e. be able to heat the water supplied exiting the tank 10, hereinafter referred to as post-heater 5, and may be arranged externally to said storage tank 10.

In such case, therefore, said water heater 1 simultaneously comprises at least a pre-heater 4 and at least a post-heater 5.

Generally, it is possible to use an auxiliary device, both when it acts as a pre-heater 4 and when it acts as a post-heater 5, which may be equipped with power regulating means which allow the energy supply, provided by the auxiliary device to be managed in relation to the comparison between the energy contents: of the storage water and of the recirculation water and/or of the storage water and of the make-up and/or of the storage water and of the water supplied by the water heater 1.

According to a preferred variant, said second device 4 is installed upstream of the outlet section 110 of the inlet duct 11, while said third device 5 is installed downstream of the inlet section 120 of the outlet duct 12.

The arrangement of said second 4 and third 5 heating device, which, as said, are preferably external to the tank 10, allows for a convenient inspection and a possible easy replacement thereof.

For clarity of description, the inlet and outlet sections of the pre-heater 4 and of the post-heater 5, as well as the inlet 11 and outlet 12 ducts whereon they may be installed, are defined in relation to the normal operation of water heater 1, i.e. to the making up cold water and supplying hot water during a withdrawal in progress.

The water heater 1 may further comprise:
- at least a first temperature sensor 61 arranged in the proximity of the top zone of the tank 10 and capable of detecting the temperature ϑu of the storage water; and/or
- at least a second temperature sensor 62 arranged in the proximity of the lower zone of the tank 10 and capable of detecting the temperature ϑd of the storage water; and/or
- at least a third temperature sensor 63, preferably arranged downstream of the outlet section 41 of the pre-heater 4, of the tank 10 and capable of detecting the temperature ϑ1; and/or
- at least a fourth temperature sensor 64 arranged in the proximity/along the outlet duct 12 of the tank 10, preferably upstream of the inlet section 50 of the post-heater 5 when provided, and capable of detecting the temperature ϑo; and/or
- at least a fifth temperature sensor 65 arranged in the proximity of the outlet of a by-pass duct of the tank 10 and capable of detecting the temperature ϑb; and/or
- at least a sixth temperature sensor 66 arranged in the proximity/along the outlet duct 12 of the tank 10, preferably downstream of the outlet section 51 of the post-heater 5, when provided, and capable of detecting at least the temperature ϑ2; and/or
- at least a flow sensor 60 capable of detecting the water flow entering or exiting the tank 10, i.e. the water flow crossing the inlet duct 11 or the outlet duct 12.

Preferably, said sensors are suitably connected and communicating with said control unit.

In general, said flow sensor 60 may be installed along the inlet duct 11.

Nothing prevents said flow sensor 60 from being installed along the outlet duct 12, as the general purpose of the flow sensor 60 is to detect whether or not a water withdrawal/make up from/into the tank 10 is in progress.

In general, it is possible to evaluate and classify the withdrawal in progress as small or large by comparing the value of the flow F detected by the flow sensor 60 with the reference value FL.

The water heater 1 is characterised in that it comprises at least a by-pass duct 13, hereinafter referred to as only by-pass 13 for descriptive convenience, capable of deviating, entirely or partially, the water flow entering the tank 10 so as to guide and convey it in a zone of the tank 10 placed at a height higher than the outlet section 110 of the inlet duct 11 and at a height lower than the inlet section 120 of the outlet duct 12.

Therefore, said by-pass 13 guides and conveys the water entering the tank 10 in a zone of the said tank 10 comprised between the outlet section 110 of the inlet duct 11 and the inlet section 120 of the outlet duct 12.

Said by-pass 13 substantially extends between the inlet duct 11, to which it is connected, and the zone of the tank 10 wherein it discharges/introduces the make-up water, said by-pass 13 being suitably shaped so as to comprise:
- at least a inlet 130 suitably connected to said inlet duct 11, for example via a diverter means 8 described shortly;
- at least a outlet 131 arranged inside the tank 10, arranged, as already mentioned, between the outlet section 110 of the inlet duct 11 and the inlet section 120 of the outlet duct 12.

Preferably, the position of said outlet 131 inside the tank 10 may be varied as necessary so that said outlet 131 may be located in the upper or middle or lower zone of the said tank 10, substantially regulating, for example, the longitudinal extension of the said by -pass 13.

Such possible adjustment of the position of the outlet 131 of the by-pass 13 allows the distance *"h"* to be adjusted and defined, while maintaining fixed the position of the inlet section 120 of the outlet duct 12 (see Figures 3, 7, 10 and 13).

In essence, by increasing/reducing the longitudinal extension of the said by-pass 13, the distance *h* is reduced/increased and consequently the volume "*v*".

The choice of the value of the distance *h*, which may be made in the design or construction step, allows the entity of the volume "*v*" and therefore the quantity of water of the storage heated through the introduction of hot water heated by the pre-heater 4 to be determined/modified, according to the methods described shortly, and introduced via the by-pass 13.

As described below, by reducing the volume *v*, the make-up water, heated by the pre-heater 4, mixes, by heating it with a smaller quantity of water of the storage, making the water heater 1 more ready to satisfy the user.

According to different executive embodiments, the by-pass 13 provides for at least a portion 134, herein referred to as outlet portion 134, which develops and is housed inside the tank 10 and whereon said at least a outlet 131 is obtained/placed. Preferably, said outlet portion 134 is arranged substantially vertically inside the tank 10 and extends from a zone in the proximity of the bottom of the same tank 10, preferably engaging from the same bottom, to a median or upper zone of the tank 10 based on the longitudinal development thereof correlated to the established/chosen distance *h*.

According to a possible variant, the by-pass 13 may be shaped substantially as an *"L"* or the like so as to be able to provide for:
- at least a first portion 133, preferably arranged externally to the tank 10, whereon said inlet 130 is obtained/placed, and
- at least a second portion, preferably arranged inside the tank 10, adapted to define said outlet portion 134 and the distance *h*,
said first 133 and second 134 portion being suitably connected and in fluid communication with each other.

According to different executive embodiments of the present invention, all falling within the same inventive concept, it is possible to identify at least two different installations of the pre-heater 4 identified and illustrated herein, by way of a non-limiting example, as Case A and Case B.

### Case A

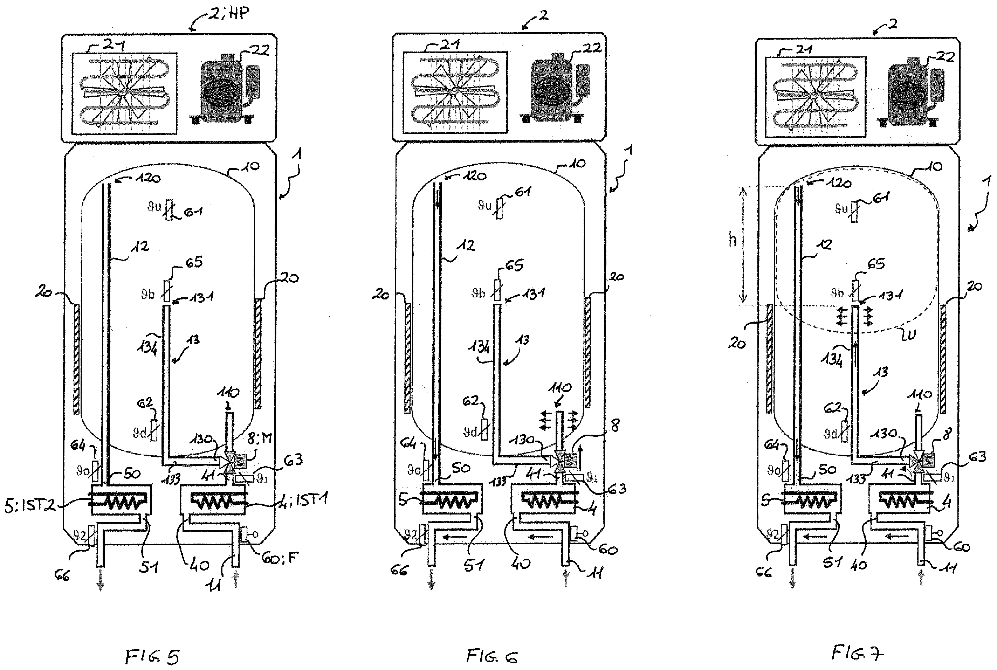

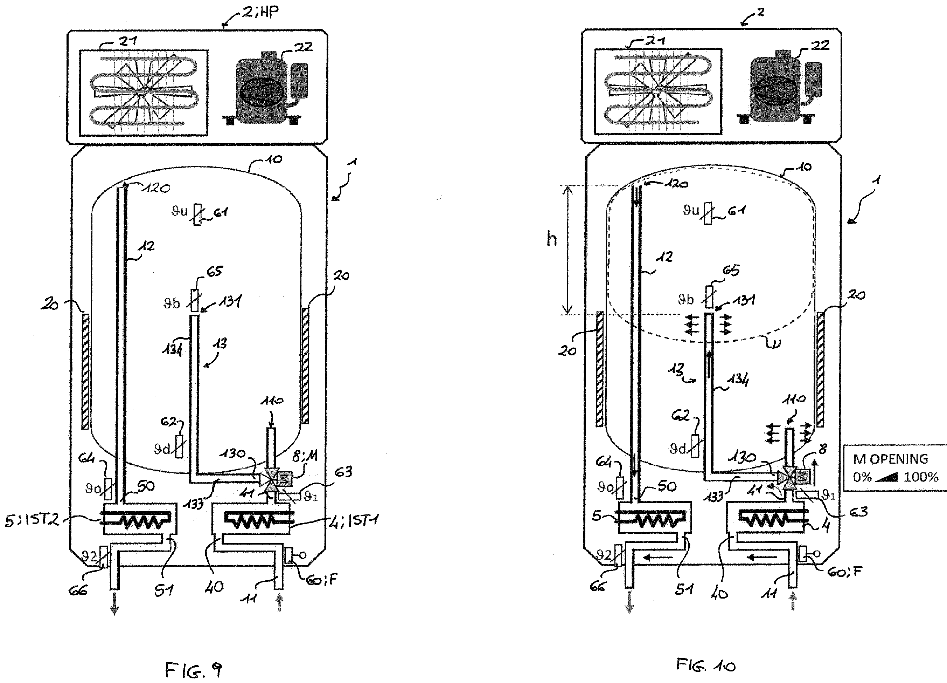

According to such variant, said pre-heater 4 is preferably positioned and installed along the inlet duct 11 (see for example the variants of Figures 1-3, of Figures 5-7, of Figures 9-10).

Preferably, the inlet 130 of the said by-pass 13 is placed along the inlet duct 11 downstream of the pre-heater 4, i.e. between the outlet 41 of the pre-heater 4 and the outlet section 110 of the inlet duct 11, preferably externally with respect to the tank 10.

### Case B

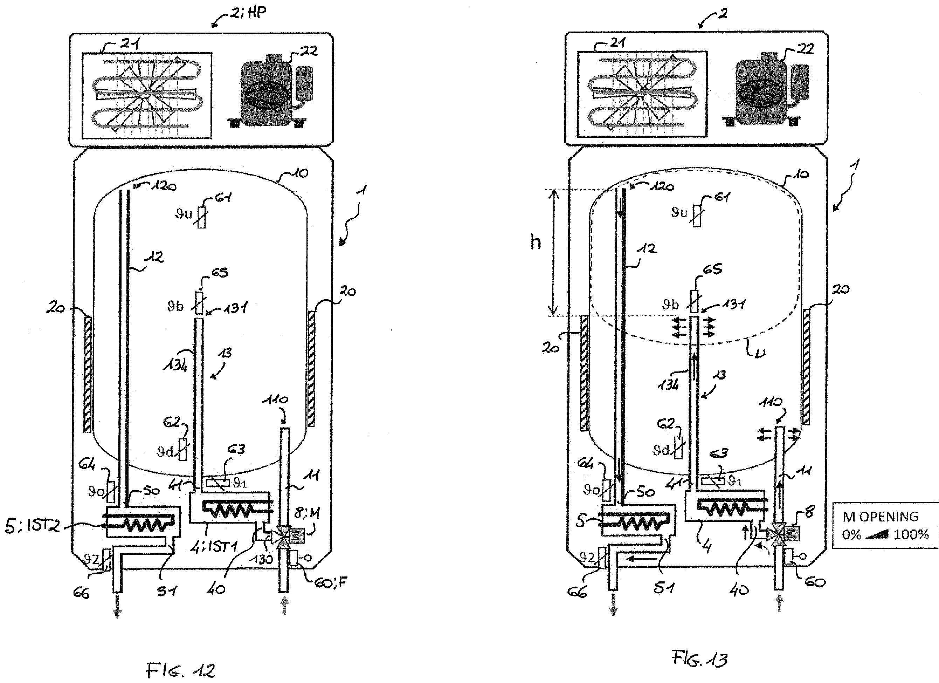

According to such variant, said pre-heater 4 is preferably positioned and installed along the by-pass duct 13 (see for example the variant of Figures 12-13), for example along said first portion 133.

Preferably, the inlet 130 of the said by-pass 13 is placed along the inlet duct 11 upstream of the inlet 40 of the pre-heater 4.

Preferably said water heater 1 is further provided with at least a diverter means 8, hereinafter referred to as diverter valve 8, preferably of the electrically or mechanically controllable type, such as for example solenoid valves, motorised valves or the like, adapted to connect said by-pass duct 13, preferably the inlet 130 thereof, to said inlet duct 11.

Said diverter valve 8, based on the type thereof, is capable of deviating the water entering the tank 10 either towards the by-pass 13 or towards the outlet section 110 or of possibly dividing it between both according to proportions set by the manufacturer and/or installer and/or user.

For example, said diverter valve 8 may be of the type:
- ON/OFF, i.e. capable of being either only opened or only closed by deviating the make-up water either towards the by-pass 13 or towards the outlet section 110, for example as in the case of the variants shown, by way of a non-limiting example in the Figures 1-3 or in the Figures 5-7; or
- adjustable, i.e. registrable between the position of maximum opening and closing, by deviating the make-up water either towards the by-pass 13 or towards the outlet section 110 or deviating it therebetween, for example as in the case of the depicted variants, by way of a non-limiting example in the Figures 9-10 or in the Figures 12-13.

According to a preferred variant, a controllable diverter valve 8 is placed along the inlet duct 11 in the section in which the by-pass 13 engages said inlet duct 11, said diverter valve 8 therefore acting as a union and connecting element among the parts and being also able to be installed externally to the tank 10.

In essence, along the inlet duct 11 there is a diverter valve 8 capable of deviating, entirely or partially, the flow of make-up water entering the tank 10 so that it may be:
i. totally diverted towards the outlet section 110 of the inlet duct 11, introducing the make-up water in the proximity of the lower zone of the tank 10 (see for example Figure 2 or 6), when said diverter valve 8 is totally closed, for example in position "M=0" (mode i); or
ii. totally diverted towards the outlet 131 of the by-pass 13, by introducing the make-up water at said distance *h* from the inlet section 120 (see for example Figure 3 or 7), when said diverter valve 8 is totally open, for example in position "M=1" (mode ii); or
iii. divided between said by-pass 13 and said outlet section 110, if said diverter valve 8 is of the adjustable type (Figure 10 or 13) and partially open (mode iii).

In general, the make-up water, in the entirety or a portion thereof, may be advantageously heated or pre-heated through the pre-heater 4 according to methods described shortly.

In particular, with reference to the variant of the Case A, it should be noted that the entire make-up water is heated, regardless of whether it is introduced into the tank 10 via the inlet duct 11 only (mode i) or the by-pass 13 only (mode ii) or via both (mode iii), while in the variant of the case B only the make-up water which is diverted and passed through the by-pass 13 is heated.

Some considerations regarding the heating and the introduction of the make-up water into the tank 10 are provided below.

In general, the water heater 1 is able to operate with the modes i), ii) and iii) reported above, regardless of whether the configuration thereof complies with the Case A or the Case B, said Cases A and B differing substantially only by the arrangement of the pre-heater 4.

Furthermore, the water heater 1 is able to operate in mode i) and/or ii) even if it is equipped with an adjustable type diverter valve 8, as it is sufficient to completely close the valve 8 to implement mode i) and open it completely to implement mode ii).

### Case A - mode i

In such circumstance, the temperature Tc or Tset is reached more slowly, because the pre-heated water, introduced into the lower zone of the tank 10, tends to mix with all the water of the storage.

### Case A - mode ii

In such circumstance the achievement of the temperature Tc or Tset is quicker, at least for a portion v of the volume of the storage, since the pre-heated water, introduced at a distance *h* from the inlet section 120, tends to mix with the water of the volume v, said volume v being only a part/portion of the entire volume of the storage of the tank 10 (Figure 3 or 7).

Furthermore, the pre-heater 4 may heat the water substantially up to Tc, Tm or Tset or in general up to a temperature substantially similar to that of the water in the proximity of the zone of the storage into which it is introduced (ϑb), so as to preserve and meet the temperature stratification of the storage.

### Case A - mode iii

Such circumstance represents a hybrid/intermediate situation with respect to the methods i) and ii), the achievement of the temperature Tc or Tset being correlated to the adjustment degree of the diverter valve 8 and to the amount of make-up water which is introduced respectively via the by- pass 13 and the outlet section 110 (Figure 10).

### Case B - mode i), ii) and iii)

Generally, the configuration of the Case B, providing for heating only the make-up water which crosses the by-pass duct 13, allows the stratification of the tank 10, to be preserved more efficiently.

In fact, the make-up water introduced by means of the outlet section 110 of the inlet duct 11 is not heated and considering that it has a temperature substantially equal to the temperature of the water network, it does not substantially alter the stratification of the storage.

Such advantage is noticeable for the various water make-up methods of the Case B, because:
- in mode i) the make-up water passes exclusively through the inlet duct 11 and is introduced into the tank 10 at network temperature;
- in mode ii) the make-up water passes exclusively through the by-pass 13 and is introduced into the pre-heated tank, preferably at a temperature substantially equal to ϑb;
- in the mode iii) the make-up water passing through the inlet duct 11 is introduced into the tank 10 at network temperature, while that passing through the by-pass duct 13 is introduced pre-heated into the tank, preferably at a temperature substantially equal to ϑb.

A possible management method of the water heater 1 shall now be described, by way of a non-limiting example, which may preferably be implemented via the control unit with which said water heater 1 is provided, said management method providing for different logics based on the fact that said water heater 1 comprises only the pre-heater 4 or both the pre-heater 4 and the post-heater 5 or is configured according to the Case A or the Case B or is equipped with an ON/OFF type or adjustable diverter valve.

Said control unit is therefore capable of controlling and commanding the different components of the water heater 1, such as for example the diverter valve 8, and/or both the main and auxiliary heating devices.

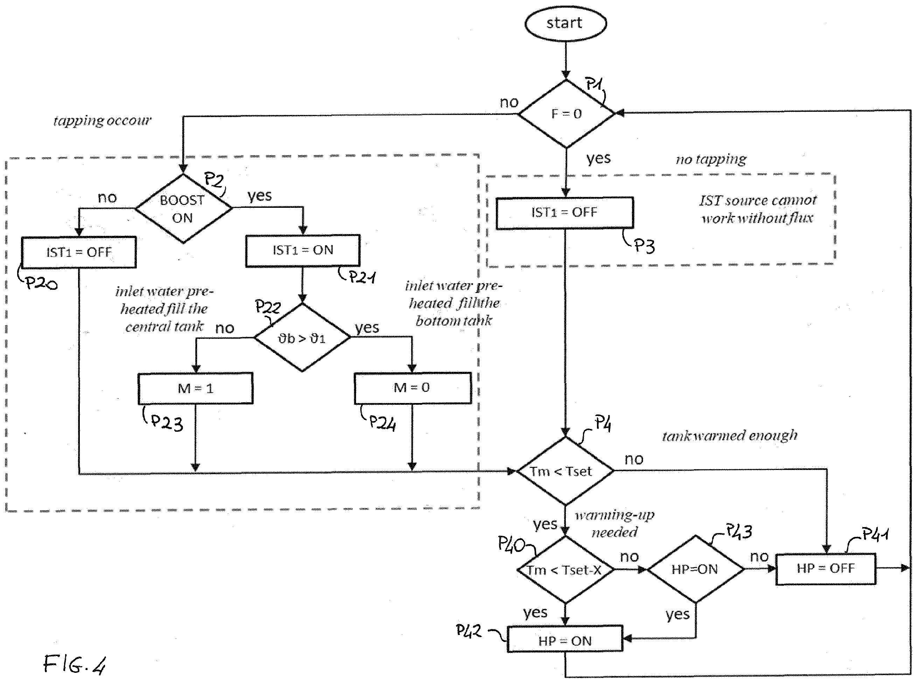

For better clarity of description, in Figures 4, 8, 11 and 14 some components of the water heater 1 have been indicated with acronyms, i.e. **F:** value detected by the flow sensor 60; **HP:** main heating device 2, **IST1:** pre-heater 4, **IST2:** post-heater 5, **M:** diverter valve 8 (such acronyms are also shown in the Figures 1, 5, 9, 12).

Furthermore, still with reference to Figures 4, 8, 11 and 14, it should be noted that in the block diagrams the rectangle shape represents an action, for example the activation of a heating device, while the diamond shape represents a control, for example a comparison among temperatures.

Said management method is aimed at controlling/coordinating different components of the water heater 1 such as, for example, at least the different heating devices of the water heater 1, both said at least a main device 2 and one or more of said auxiliary devices 4, 5 and/or at least the diverter valve 8, based on the functions to be implemented, whether standard/normal or additional.

The management method may consider different factors in order to implement such control/coordination, such as for example the presence/absence of a withdrawal, the number and/or type of said heating devices, and/or the set-point temperature Tset and/or the temperature Tc and/or the temperature of the storage water which may be possibly represented by one or more of the temperatures ϑu and/or ϑd and/or ϑb and or Tm and/or of the inlet ϑ1 or outlet ϑo water temperature.

Said management method is characterised in that it implements one or more supplementary heating functions, by one or more of said auxiliary devices 4, 5, of the water introduced and/or withdrawn from the storage, where the activation of at least one or more of said additional functions depending on at least:
- the presence or not of a withdrawal; and
- the control of at least the temperature of the water supplied ϑo;

In general, according to different possible executive variants, the non-activation or the deactivation of at least one or more of said additional functions may depend on at least the absence or end of a withdrawal.

Hereinafter, the term "no withdrawal", without any limiting intent, is to be referred to as both the lack of a withdrawal and the end thereof, these conditions corresponding to measurements of the flow sensor 60 substantially equal to zero. In general, said additional functions may comprise, for example, at least the BOOST function, the POST-HEATING function or the like.

Said management method of the water heater 1 may comprise at least the following phases.

The first phase P1, S1 of the method according to the present invention, provided by all the variants of said method illustrated herein, provides for verifying, via the flow sensor 60, whether or not a hot water withdrawal is in progress and based on such condition, two different possible operating/management logics may be implemented, one of which is dedicated to the case of a withdrawal and the other to the case of absence of a withdrawal.

With reference to Figure 4, a possible management method of a water heater 1 which may be equipped with at least the BOOST function and provided with the only pre-heater 4, placed along the inlet duct 11 (Case A), and an on/off diverter means 8 shall now be described.

### Case of withdrawal in progress ("tapping occurrence")

During a withdrawal (F≠0), said method provides for checking, through the phase P2, whether the BOOST function is selected or not.

If the BOOST function is selected, phase P21 is provided, by activating the pre-heater 4 (IST1=ON), while if the BOOST function is disabled the pre-heater 4 remains switched off (IST1=OFF), phase P20 and phase P4 is provided directly.

The BOOST function allows the make-up water to be heated, via at least said pre-heater 4, accelerating the heating of the storage and consequently reducing the time necessary to bring the storage substantially to Tset or to Tc.

With the BOOST function selected and the pre-heater 4 active, implementing the phase P22 with which there is checked whether the temperature ϑb is greater than the inlet one ϑ1 is provided.

If ϑb>ϑ1, the diverter valve 8 remains in "position 0" (M=0), maintaining the by-pass duct 13 closed and leaving the inlet duct 11 open, phase P24.

In such case, the make-up of pre-heated water takes place via the outlet section 110 of the inlet duct 11, in the lower part of the tank 10 which is then heated (Figure 2).

If there is no ϑb>ϑ1, the diverter valve 8 is switched to "position 1" (M=1) by opening, preferably totally, by-pass duct 13 and closing, preferably totally, inlet duct 11, phase P23.

In such case, the make-up of pre-heated water takes place via the outlet 131 of the by-pass 13, at a distance *h* from the inlet section 120 of the outlet duct 12 (Figure 3).

As anticipated, this allows the pre-heated water to be introduced into a zone in which the water of the storage, by virtue of the stratification phenomenon, has a higher temperature than the water of the storage in the proximity of the lower zone of the tank 10, speeding up the recovery of the storage at a temperature Tset or the attainment of the temperature Tc, in particular of the volume v.

Furthermore, in the event of a significant withdrawal (in terms of volume of water withdrawn) or of small but successive and close withdrawals, the make-up of the storage, via by-pass 13, of pre-heated water advantageously allows withdrawing hot or at least pre-heated water or in general with a temperature higher than the network temperature of the make-up water.

As partly anticipated, the pre-heated water may be brought, via the pre-heater 4, to a temperature substantially equal to Tc, Tm or Tset or in general up to a temperature substantially similar to that of the water in the proximity of the storage zone wherein it is introduced, i.e. substantially equal to ϑb.

The next phase P4 provides for monitoring the value of the temperature Tm by comparing it with Tset; the aim is not to allow the water of the storage to cool too much.

Following the comparison between Tm and Tset (phase P4):
- if Tm is lower than Tset, the next phase P40 is provided;
- if Tm is greater than Tset, the main heating device 2 remains switched off or in stand-by (HP=OFF), phase P41.

Phase P40 is provided and implemented in the event that, as preferred, a hysteresis parameter X is subtracted from the temperature Tset in order to avoid frequent and subsequent re-ignitions of the main heating device 2.

Said phase P40 provides for comparing Tm with Tset-X and following said comparison:
- if Tm is lower than Tset-X, the main heating device 2 is activated (HP=ON), so as to bring the temperature of the storage back to the desired and set temperature Tset, phase P42,
- if Tm is greater than Tset-X, phase P43 is provided.

The aim of the phase P43 is to check whether the main heating device 2 is switched on or not during the withdrawal.

In fact, the temperature at which the storage should be heated is Tset, and not Tset-X, therefore during a withdrawal:
- if the main heating device 2 is already in operation, then it should remain switched on and phase P42 is provided, while
- if the main heating device 2 is switched off or in stand-by, then it should remain switched off or in stand-by and phase P41 is provided.

### Case of no withdrawal ("no tapping")

In case of no withdrawals (F=0) or at the end of a withdrawal, said method provides for switching off or keeping the auxiliary heating device 4 switched off (IST1=OFF), phase P3.

In such conditions (F=0; IST1=OFF), the management method provides for implementing phase P4 so as to monitor the value of the temperature Tm and compare it with Tset; the aim is not to allow the storage water to cool too much due to possible heat losses or the like.

In absence of withdrawals, therefore, the auxiliary heating device is not active and the main heating device may possibly be activated following the comparison between Tm and Tset.

In such case, in fact, the average temperature Tm may vary mainly due to heat losses or the like which may lead to a progressive decrease in the temperature Tm. In absence of withdrawals, therefore, the auxiliary heating devices are not active and the main heating device may possibly be activated following the comparison between Tm and Tset or between Tm and Tset-X according to the phases P40-P43 previously described.

In absence of a withdrawal, therefore, following the phase P43:
- if the main heating device 2 is already in operation, then it should remain switched on and phase P42 is provided, while
- if the main heating device 2 is switched off or in stand-by, then it should remain switched off or in stand-by and phase P41 is provided.

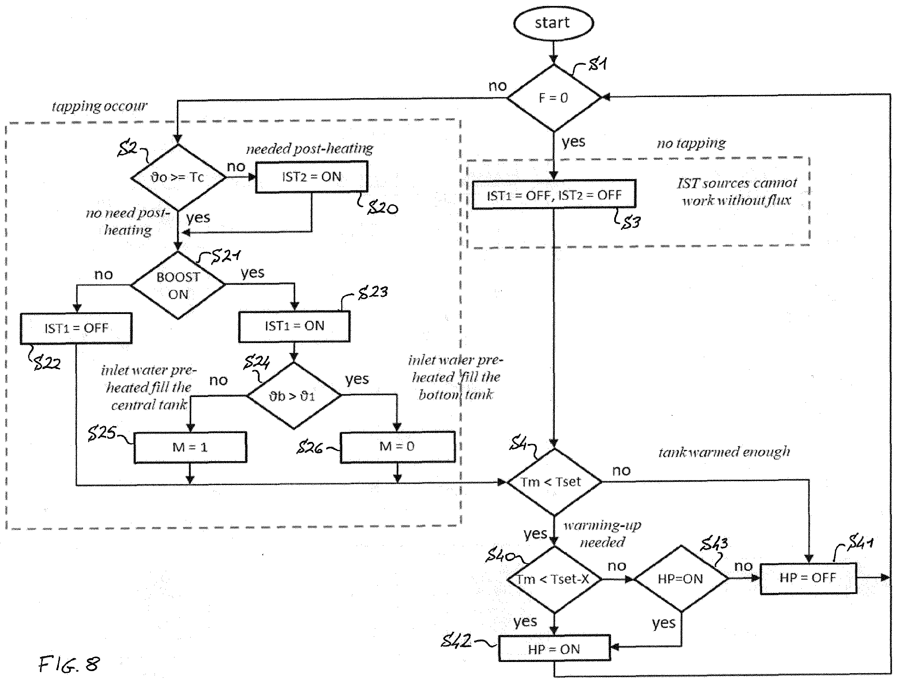

With reference to Figure 8, a possible management method of the water heater which may be equipped with at least the BOOST function and provided with both the pre-heater 4, located along the inlet duct 11 (Case A), and the post -heater 5 and with an on/off diverter means 8.

### Case of withdrawal in progress ("tapping occurrence")

During a withdrawal (F≠0) said method provides for checking whether the outlet water ϑo meets the comfort temperature Tc; the aim is that of checking whether the water supplied meets the parameters set by the manufacturer and/or installer and/or user.

Such check is carried out with the phase S2, through which there is checked whether the outlet temperature ϑo of the water heater 1 is higher than or equal to the comfort temperature Tc (ϑo≥Tc), where:
- if so, the next phase S21 of the method is provided;
- if not, phase S20 is provided by activating the post-heater 5 (IST2=ON) which provides for heating the water substantially up to Tc (post-heating) to then continue with said subsequent phase S21.

Phase S21 provides for checking whether the BOOST function is selected or not. In fact, the method, following the control of the output temperature ϑo, checks whether the BOOST function is set and selected or not.

If the BOOST function is selected, phase S23 is provided, by activating the pre-heater 4 (IST1=ON), while if the BOOST function is disabled the pre-heater 4 remains switched off (IST1=OFF), phase S22 and phase S4 is provided directly. As already mentioned, the BOOST function allows the make-up water to be heated, via at least said pre-heater 4, accelerating the heating of the storage and consequently reducing the time necessary to bring the storage substantially to Tset or Tc.

With the BOOST function selected and the pre-heater 4 active, implementing the phase S24 with which there is checked whether the temperature ϑb is greater than the inlet one ϑ1 is provided.

If ϑb>ϑ1, the diverter valve 8 remains in "position 0" (M=0), maintaining the by-pass duct 13 closed and leaving the inlet duct 11 open, phase S26.

In such case, the make-up of pre-heated water takes place via the outlet section 110 of the inlet duct 11, in the lower part of the tank 10 which is then heated (Figure 6).

If there is no ϑb>ϑ1, the diverter valve 8 is switched to "position 1" (M=1) by opening, preferably totally, by-pass duct 13 and closing, preferably totally, inlet duct 11, phase S25.

In such case, the make-up of pre-heated water occurs via the outlet 131 of the by-pass 13, at a distance *h* from the inlet section 120 of the outlet duct 12.

As anticipated, this allows the pre-heated water to be introduced into a zone in which the water of the storage, by virtue of the stratification phenomenon, has a higher temperature than the water of the storage in the proximity of the lower zone of the tank 10, speeding up the recovery of the storage at a temperature Tset or the attainment of the temperature Tc, in particular of the volume v.

Furthermore, if the heat supplied by the pre-heater 4 and/or by the main heating device 2 is not sufficient to meet the requests of the user, supplying water at a temperature Tc, the post-heater 5 may intervene by providing the necessary heat. The next phase S4 provides for monitoring the value of the temperature Tm by comparing it with Tset; the aim is not to allow the water of the storage to cool too much.

Following the comparison between Tm and Tset (phase S4):
- if Tm is lower than Tset, the next phase S40 is provided;
- if Tm is greater than Tset, the main heating device 2 remains switched off or in stand-by (HP=OFF), phase S41.

Phase S40 is provided and implemented in the event that, as preferred, a hysteresis parameter X is subtracted from the temperature Tset in order to avoid frequent and subsequent re-ignitions of the main heating device 2.

Said phase S40 provides for comparing Tm with Tset-X and following said comparison:
- if Tm is lower than Tset-X, the main heating device 2 is activated (HP=ON), so as to bring the temperature of the storage back to the desired and set temperature Tset, phase S42,
- if Tm is greater than Tset-X, phase S43 is provided.

The aim of the phase S43 is to check whether the main heating device 2 is switched on or not during the withdrawal.

In fact, the temperature at which the storage should be heated is Tset, and not Tset-X, therefore during a withdrawal:
- if the main heating device 2 is already in operation, then it should remain switched on and phase S42 is provided, while
- if the main heating device 2 is switched off or in stand-by, then it should remain switched off or in stand-by and phase S41 is provided.

### Case of no withdrawal ("no tapping")

In case of no withdrawals (F=0) or at the end of a withdrawal, said method provides for switching off or maintaining switched off the auxiliary heating devices (IST1=OFF; IST2=OFF), phase S3.

In such conditions (F=0; IST1=OFF; IST2=OFF), the management method provides for implementing the phase S4 so as to monitor the temperature value Tm and compare it with Tset; the aim is not to allow the storage water to cool too much due to possible heat losses or the like.

In absence of withdrawals, therefore, the auxiliary heating devices are not active and the main heating device may possibly be activated following the comparison between Tm and Tset, phase S4.

Following the comparison between Tm and Tset (phase S4):
- if Tm is lower than Tset, the next phase S40 is provided,
- if Tm is greater than Tset, the main heating device 2 remains switched off or in stand-by (HP=OFF) as well as the pre-heater 4, phase S41.

Phase S40 is provided and implemented in the event that, as preferred, a hysteresis parameter X is subtracted from the temperature Tset, in order to avoid frequent and subsequent re-ignitions of the main heating device 2.

Said phase S40 provides for comparing Tm with Tset-X and following said comparison:
- if Tm is lower than Tset-X, the main heating device 2 (HP=ON) is activated, phase S42,
- if Tm is greater than Tset-X, phase S43 is provided.

Phase S43 has the aim to check if the main heating device 2 is switched on or not. In fact, the temperature to which the storage should be heated is Tset and not Tset-X, therefore in the absence of a withdrawal:
- if the main heating device 2 is already in operation, then it should remain switched on and phase S42 is provided, while
- if the main heating device 2 is switched off or in stand-by, then it should remain switched off or in stand-by and phase S41 is provided.

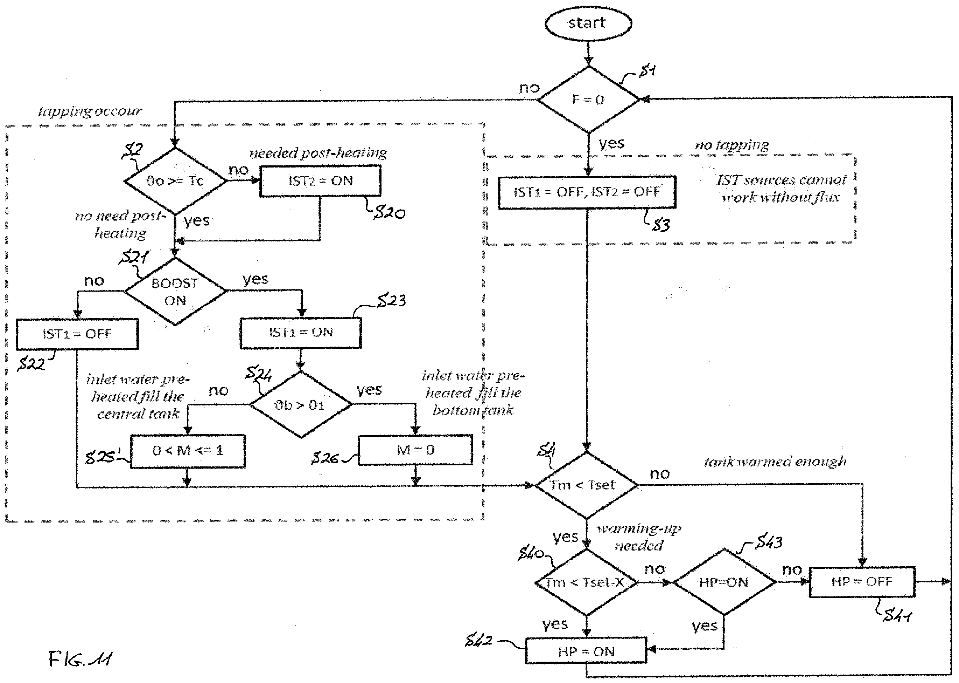

With reference to Figure 11, a possible management method of the water heater which may be equipped with at least the BOOST function and provided with both the pre-heater 4, located along the inlet duct 11 (Case A), and the post-heater 5 of an adjustable diverter means 8.

The phases of the method provided for such variant are substantially the same as described with reference to the possible management method applied to a water heater which may be equipped with at least the BOOST function and provided with both the pre-heater 4 and the post-heater 5 and a diverter means 8 on/off (Figure 8).

As visible in Figure 11, the only different phase is phase S25', relating to the operating logic in case of withdrawal.

In fact, with the BOOST function selected and the pre-heater 4 active, implementing phase S24 is provided, with which there is checked whether the temperature ϑb is higher than the inlet one ϑ1.

If ϑb is not ϑ1, phase S25' provides for the diverter valve 8 to open, at least partially, said by-pass duct 13, i.e. that it is switched to a position comprised between 0<M≤1, i.e. the diverter valve 8 may take a position comprised between the position M>0 and the totally open position M=1, in other words the diverter valve 8 may not be totally closed in order to send water to the by-pass 13.

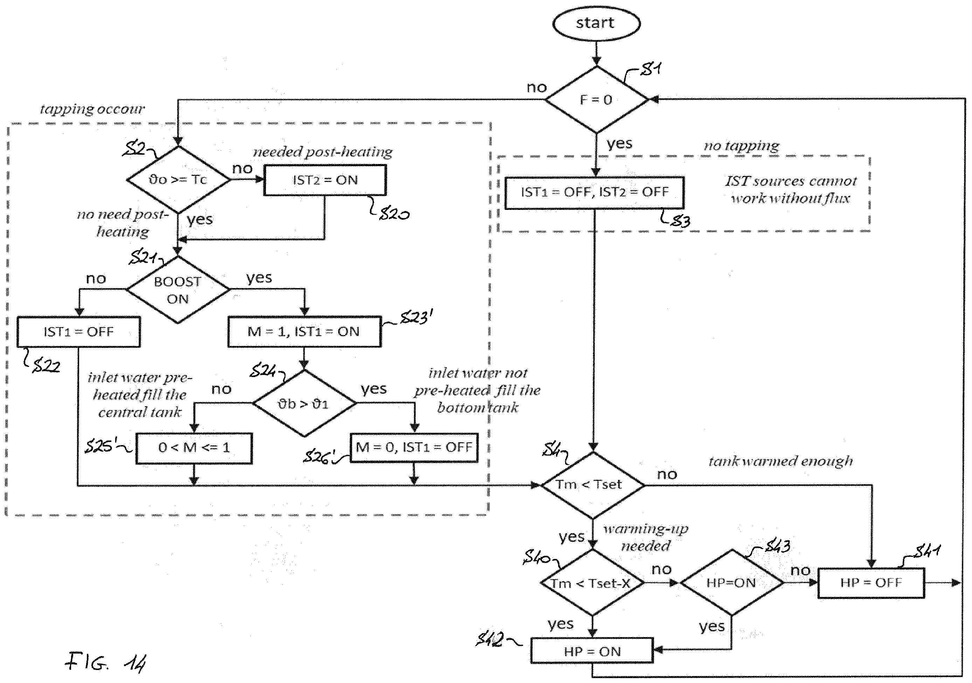

With reference to Figure 14, a possible management method of the water heater which may be equipped with at least the BOOST function and provided with both the pre-heater 4, located along the by-pass duct 13 (Case B), and the post-heater 5 of an adjustable diverter means 8.

The phases of the method provided for such variant are substantially the same as described with reference to the possible management method applied to a water heater which may be equipped with at least the BOOST function and provided with both the pre-heater 4, placed along the inlet duct 11, and the post-heater 5 and a diverter means 8 on/off (Figure 8).

As visible in Figure 14, the phases that differ from what described are the phases S23', S25' and S26', relating to the operating logic in the event of a withdrawal. If the BOOST function is selected, phase S23' is provided, by activating the pre-heater 4 (IST1=ON), and by fully opening the diverter valve 8 (M=1) while if the BOOST function is disabled the pre-heater 4 remains switched off (IST1=OFF), phase S22, and the following phase S4 is provided directly.

Subsequently, with the BOOST function selected and pre-heater 4 active, implementing phase S24 is provided, with which there is checked whether the temperature ϑb is higher than the inlet one ϑ1.

If ϑb is not ϑ1, phase S25' provides for the diverter valve 8 to open, at least partially, said by-pass duct (13), i.e. that it is switched to a position comprised between 0<M≤1, i.e. the diverter valve 8 may take a position comprised between the position M>0 and the totally open position M=1, in other words the diverter valve 8 may not be totally closed in order to send water to the by-pass 13.

If ϑb>ϑ1, the diverter valve 8 remains in "position 0" (M=0), closing or maintaining the by-pass duct 13 closed and leaving the inlet duct 11 open and pre-heater 4 is turned off or put in stand-by (IST1=OFF), phase S26'.

In such case the make-up water is not heated and is introduced at network temperature into the tank 10 via the outlet section 110 of the inlet duct 11.

In general, the water heater according to the present invention, thanks to the adoption of auxiliary heating devices, may install and use a smaller main heating device; that is further true in the case of the heat pumps.

In fact, heat pumps of lower power have smaller heat exchange surfaces (evaporator/condenser) and the overall size of the same heat pump will be reduced. On the other hand, it is known that the electric heaters require, by their nature, reduced and compact overall dimensions and if they are used as auxiliary heating devices, the overall dimension of the water heater 1 is smaller than the overall dimension of a water heater of the same power which uses only one heat pump as a heating source.

Furthermore, the adoption of instantaneous heating devices allows the volume of the storage to be reduced, because such devices are able to effectively compensate for deep and frequent withdrawals by the user.

It should be noted that the adoption of smaller storages allows for the installation of smaller heat pumps, further contributing to reduce the overall dimensions of the water heater according to the present invention.

## Claims

1. Storage water heater (1) comprising at least a heating device, at least a storage tank (10) wherein water is stored and heated, at least a control and management unit capable of controlling said at least a heating device, at least a inlet duct (11) through which water may be introduced into said tank (10), at least a outlet duct (12) through which water may be sent/withdrawn from the said tank (10),
wherein it comprises at least two heating devices, of which at least a main heating device (2) and at least a second (4) auxiliary heating device adapted to act as a pre-heater (4), and wherein said water heater (1) comprises at least a by-pass duct (13) capable of deviating, entirely or partially, the water flow entering said tank (10) so as to guide and convey it in a zone of the said tank (10) placed at a height higher than the outlet section (110) of the said inlet duct (11), said by-pass duct (13) extending between the inlet duct (11) to which it is connected, and the zone of the said tank (10) wherein it discharges/introduces the make-up water, said by-pass duct (13) being shaped so as to comprise:
- at least a inlet (130) connected to said inlet duct (11);
- at least a outlet (131) arranged inside said tank (10);
said by-pass duct (13) providing for at least a outlet portion (134) that develops and is housed inside said tank (10) and whereon said at least a outlet (131) is obtained/placed,
**characterised in that**
said at least a outlet (131) of said by-pass duct (13) is arranged between the outlet section (110) of the said inlet duct (11) and the inlet section (120) of the said outlet duct (12), at a distance h from the inlet section (120) of said outlet duct (12).

2. Storage water heater (1) according to the previous claim, wherein said outlet portion (134) is arranged vertically inside the said tank (10) and extends from a zone in the proximity of the bottom of the said tank (10) to a median or upper zone of the same tank (10) based on the longitudinal development thereof.

3. Storage water heater (1) according to the previous claim, wherein said by-pass duct (13) is shaped so as to be able to provide for:
- at least a first portion (133), arranged externally to said tank (10), whereon said inlet (130) is obtained/placed, and
- at least a second portion, arranged inside the tank (10), adapted to define said outlet portion (134).

4. Storage water heater (1) according to any previous claim, wherein said water heater (1) is further provided with a at least a diverter means (8) adapted to connect said by-pass duct (13) to said inlet duct (11).

5. Storage water heater (1) according to any previous claim, wherein said at least a diverter means (8) is of the electrically or mechanically controllable type.

6. Storage water heater (1) according to the previous claim, wherein said at least a diverter means (8) is of the ON/OFF type, i.e. capable of being either only open or only closed.

7. Storage water heater (1) according to the previous claim 5, wherein said at least a diverter means (8) is of the adjustable type, i.e. registrable between the opening and closing position.

8. Storage water heater (1) according to any previous claim, wherein said at least a pre-heater (4) is installed along said inlet duct (11) and said inlet (130) of the said by-pass duct (13) is placed along said inlet duct (11), downstream of the said pre-heater (4).

9. Storage water heater (1) according to any previous claim 1 to 7, wherein said at least a pre-heater (4) is installed along said by-pass duct (13) and said inlet (130) of the said by-pass duct (13) is placed along said inlet duct (11), upstream of the inlet (40) of the said pre-heater (4).

10. Storage water heater (1) according to any previous claim, wherein said water heater (1) further comprises at least a third (5) auxiliary heating device, installed along said outlet duct (12) so as to act as a post-heater (5).

11. Storage water heater (1) according to one or more of the previous claims from 1 to 10, wherein:
- said first main heating device (2) comprises a heat pump or means that use the solar energy or the geothermal energy or the like;
- said second (4) and third auxiliary heating device (5) comprise heaters of the instantaneous type.

12. Storage water heater (1) according to the previous claim 10 or 11, wherein said second (4) and third auxiliary heating device (5) and said at least a diverter means (8) are installed externally to said tank (10).

13. Storage water heater (1) according to any previous claim, wherein said water heater (1) is further provided with:
- at least a first temperature sensor (61) arranged in the proximity of the top zone of the said tank (10) and capable of detecting the temperature ϑu of the storage water; and/or
- at least a second temperature sensor (62) arranged in the proximity of the lower zone of the said tank (10) and capable of detecting the temperature ϑd of the water of the storage; and/or
- at least a third temperature sensor (63) capable of detecting the temperature ϑ1; and/or
- at least a fourth temperature sensor (64) arranged in the proximity/along said outlet duct (12) of the said tank (10), and capable of detecting the temperature out ϑo; and/or
- at least a fifth temperature sensor (65) arranged in the proximity of the outlet (131) of the said by-pass duct (13) and capable of detecting the temperature ϑb; and/or
- at least a sixth temperature sensor (66) arranged in the proximity/along said outlet duct (12) of the said tank (10), downstream of the outlet section (51) of the said post-heater (5) when provided, and capable of detecting at least the temperature ϑ2; and/or
- at least a flow sensor (60) capable of detecting the water flow entering or exiting into/from said tank (10).

14. Management method of a storage water heater (1) according to the previous claims 1 to 13, said management method being aimed at controlling/coordinating different components of the said water heater (1) such as at least the different heating devices of the said water heater (1), both said at least a main device (2) and one or more of said auxiliary devices (4, 5), and/or at least said diverter means (8),
**characterised in that**
said management method implements one or more supplementary heating functions, by one or more of said auxiliary devices (4, 5), of the water introduced and/or withdrawn from the storage, where the activation of at least one or more of said additional functions depending on at least:
- the presence or not of a withdrawal; and
- the control of at least the temperature of the water supplied ϑo.

15. Management method of a storage water heater (1) according to the previous claim, wherein said supplementary functions comprise at least a BOOST function, which allows for an additional heating, with respect to that provided by said main heating device (2) at least of the water entering into said water heater (1) by at least said second auxiliary heating device (4).

16. Management method of a storage water heater (1) according to the previous claim, wherein said water heater (1) may be equipped with at least said BOOST function and is provided with only said pre-heater (4), placed along said inlet duct (11), and a diverter means (8) of the on/off type, where, following the verification phase of a withdrawal (P1), in case of a withdrawal, said method provides for:
- verifying if the BOOST function (P2) is selected or not:
- if said BOOST function is selected, the activation of said pre-heater (4) (P21) is provided,
- if said BOOST function is disabled, said pre-heater (4) remains switched off (P20) and the next phase (P4) is provided directly;
- with the BOOST function selected and said pre-heater (4) active, the temperature ϑb is checked (P22) whether greater than the inlet one ϑ1:
- if ϑb>ϑ1 (P24), said diverter means (8) remains in "position 0" maintaining said by-pass duct (13) closed and leaving said inlet duct (11) open,
- if ϑb is not ϑ1 (P23), said diverter means (8) is switched to "position 1" (M=1) opening said by-pass duct (13) and closing said inlet duct (11).
- monitoring the value of the temperature Tm by comparing it with the value of the temperature Tset (P4), where:
- if Tm is lower than Tset, the next phase (P40) is provided;
- if Tm is greater than Tset, said main heating device (2) remains switched off or in stand-by (P41).
- subtracting a hysteresis parameter X from said set-point temperature Tset and comparing it with said Tm (P40), where:
- if Tm is lower than Tset-X, said main heating device (2) (P42) is activated,
- if Tm is greater than Tset-X, checking whether said main heating device (2) is switched on or not during the withdrawal (P43) is provided:
- if said main heating device (2) is already in operation, it remains switched on, whereas
- if said main heating device (2) is switched off or in stand-by, it remains switched off or in stand-by.

17. Management method of a storage water heater (1) according to the previous claim 15 or 16, wherein said water heater (1) may be equipped with at least said BOOST function and is provided with only said pre-heater (4), placed along said inlet duct (11), and with a diverter means (8) of the on/off type, where, following the verification phase of a withdrawal (P1), in the absence of a withdrawal, said method provides for:
- switching and maintaining said pre-heater (4) (P3) switched off;
- monitoring the value of the temperature Tm by comparing it with the value of the temperature Tset (P4), where:
- if Tm is lower than Tset, the next phase (P40) is provided,
- if Tm is greater than Tset, said main heating device (2) remains switched off or in stand-by (P41);
- subtracting a hysteresis parameter X from said set-point temperature Tset and comparing it with said Tm (P40), where:
- if Tm is lower than Tset-X, said main heating device (2) (P42) is activated,
- if Tm is greater than Tset-X, checking whether said main heating device (2) is switched on or not in the absence of a withdrawal (P43) is provided:
- if said main heating device (2) is already in operation, it remains switched on, whereas
- if said main heating device (2) is switched off or in stand-by, it remains switched off or in stand-by.

18. Management method of a storage water heater (1) according to the previous claim 15, wherein said water heater (1) may be equipped with at least said BOOST function and is provided with both the said pre-heater (4), placed along said inlet duct (11), and the said post-heater (5) and with a diverter means (8) of the on/off type, wherein, following the verification phase of a withdrawal (S1), in case of a withdrawal said method provides for:
- checking if the outlet temperature ϑo meets the comfort temperature Tc (S2), i.e. whether said outlet temperature ϑo is greater than said comfort temperature Tc (ϑo≥Tc), if so, the next phase (S21) of the method is provided; if not (S20) said post-heater (5) is activated to then proceed with said next phase (S21);
- checking if said BOOST function is set/selected (S21):
- if said BOOST function is selected (S23), said pre-heater (4) is activated,
- if said BOOST function is disabled (S22) said pre-heater (4) remains switched off;
- checking if the temperature ϑb is greater than the inlet one ϑ1 (S24):
- if ϑb>ϑ1 (S26), said diverter means (8) maintains said by-pass duct (13) closed and leaves said inlet duct (11) open,
- if ϑb is not >ϑ1 (S25), said diverter means (8) opens said by-pass duct (13) and closes said inlet duct (11);
- monitoring the value of the temperature Tm by comparing it with the value of the temperature Tset (S4), where:
- if Tm is lower than Tset, the next phase (S40) is provided;
- if Tm is greater than Tset, said main heating device (2) remains switched off or in stand-by (S41).
- subtracting a hysteresis parameter X from said set-point temperature Tset and comparing it with said Tm (S40), where:
- if Tm is lower than Tset-X, said main heating device (2) (S42) is activated,
- if Tm is greater than Tset-X, checking whether said main heating device (2) is switched on or not during the withdrawal (S43) is provided:
- if said main heating device (2) is already in operation, it remains switched on, whereas
- if said main heating device (2) is switched off or in stand-by, it remains switched off or in stand-by.

19. Management method of a storage water heater (1) according to the previous claim 15 or 18, wherein said water heater (1) may be equipped with at least said BOOST function and is provided with both the said pre-heater (4), placed along said inlet duct (11), and the said post-heater (5) and with a diverter means (8) of the on/off type, where, following the verification phase of a withdrawal (S1), in the absence of a withdrawal, said method provides for:
- switching off and maintaining said pre-heater (4) and said post-heater (5) (S3) switched off;
- monitoring the value of the temperature Tm by comparing it with the value of the temperature Tset (S4), where:
- if Tm is lower than Tset, the next phase (S40) is provided,
- if Tm is greater than Tset, said main heating device (2) remains switched off or in stand-by (S41);
- subtracting a hysteresis parameter X from said set-point temperature Tset and comparing it with said Tm (S40), where:
- if Tm is lower than Tset-X, said main heating device (2) (S42) is activated,
- if Tm is greater than Tset-X, checking whether said main heating device (2) is switched on or not in the absence of a withdrawal (S43) is provided:
- if said main heating device (2) is already in operation, it remains switched on, whereas
- if said main heating device (2) is switched off or in stand-by, it remains switched off or in stand-by.

20. Management method of a storage water heater (1) according to the previous claim 15 or 18, wherein said water heater (1) may be equipped with at least said BOOST function and is provided with both said pre-heater (4), placed along said inlet duct (11), and said post-heater (5), and with a diverter means (8) of the adjustable type, said method providing for the same phases as the management method according to the previous claim 19 and differs in that, in case of a withdrawal:
when checking the temperatures ϑb and ϑ1 (S24), if ϑb is not ϑ1 (S25'), said diverter means (8) opens, at least partially, said by-pass duct (13).

21. Management method of a storage water heater (1) according to the previous claim 15 or 18, wherein said water heater (1) may be equipped with at least said BOOST function and is provided both with said pre-heater (4), placed along said by-pass duct (13), and said post-heater (5), and with a diverter means (8) of the adjustable type, said method providing for the same phases as the management method according to the previous claim 19 and differs in that, in case of a withdrawal:
- by controlling if said BOOST function is set/selected (S21):
- if said BOOST function is selected, the activation of said pre-heater (4) and the full opening of said diverter means (8) is provided;
- by controlling if the temperature ϑb is greater than the inlet one ϑ1 (S24):
- if ϑb is not >ϑ1 (S25'), said diverter means (8) opens, at least partially, said by-pass duct (13);
- if ϑb>ϑ1, said diverter means (8) closes or maintains said by-pass duct (13) closed and said pre-heater (4) is switched off or placed in stand-by (S26').

## Patentansprüche

1. Warmwasserspeicher (1), umfassend mindestens eine Heizvorrichtung, mindestens einen Speichertank (10), in dem Wasser gespeichert und erhitzt wird, mindestens eine Kontroll- und Steuerungseinheit, die in der Lage ist, die mindestens eine Heizvorrichtung zu steuern, mindestens eine Einlassleitung (11), durch die Wasser in den Tank (10) eingeleitet werden kann, mindestens eine Auslassleitung (12), durch die Wasser aus dem Tank (10) gesendet/entnommen werden kann,
wobei
er mindestens zwei Heizvorrichtungen umfasst, davon mindestens eine Hauptheizvorrichtung (2) und mindestens eine zweite (4) Zusatzheizvorrichtung, die geeignet ist, als ein Vorheizer (4) zu dienen, und wobei
der Warmwasserbereiter (1) mindestens eine Bypassleitung (13) umfasst, die in der Lage ist, den Wasserstrom, der in den Tank (10) eintritt, ganz oder teilweise umzuleiten, um ihn in eine Zone des Tanks (10) zu leiten und zu befördern, die höher liegt als der Auslassabschnitt (110) der Einlassleitung (11), wobei sich die Bypassleitung (13) zwischen der Einlassleitung (11), an die sie angeschlossen ist, und der Zone des Tanks (10) erstreckt, worin sie das Nachspeisewasser ableitet/einleitet, wobei die Bypassleitung (13) geformt ist, um zu umfassen:
- mindestens einen Einlass (130), der an die Einlassleitung (11) angeschlossen ist;
- mindestens einen Auslass (131), der im Inneren des Tanks (10) angeordnet ist;
wobei die Bypassleitung (13) mindestens einen Auslassbereich (134) vorsieht, der sich im Inneren des Tanks (10) entwickelt und untergebracht ist und woran der mindestens eine Auslass (131) erhalten/platziert ist,
**dadurch gekennzeichnet, dass** mindestens ein Auslass (131) der Bypassleitung (13) zwischen dem Auslassabschnitt (110) der Einlassleitung (11) und dem Einlassabschnitt (120) der Auslassleitung (12) in einem Abstand h von dem Einlassabschnitt (120) der Auslassleitung (12) angeordnet ist.

2. Warmwasserspeicher (1) nach dem vorhergehenden Anspruch, wobei der Auslassbereich (134) vertikal im Inneren des Tanks (10) angeordnet ist und sich von einer Zone in der Nähe des Bodens des Tanks (10) zu einer mittleren oder oberen Zone des Tanks (10) basierend auf der Längsentwicklung davon erstreckt.

3. Warmwasserspeicher (1) nach dem vorhergehenden Anspruch, wobei die Bypassleitung (13) geformt ist, um in der Lage zu sein, vorzusehen:
- mindestens einen ersten Bereich (133), der außerhalb des Tanks (10) angeordnet ist, woran der Einlass (130) erhalten/platziert ist, und
- mindestens einen zweiten Bereich, der im Inneren des Tanks (10) angeordnet ist, der geeignet ist, den Auslassbereich (134) zu definieren.

4. Warmwasserspeicher (1) nach einem der vorhergehenden Ansprüche, wobei der Warmwasserbereiter (1) ferner mit mindestens einem Ablenkmittel (8) versehen ist, das geeignet ist, die Bypassleitung (13) an die Einlassleitung (11) anzuschließen.

5. Warmwasserspeicher (1) nach einem der vorhergehenden Ansprüche, wobei das mindestens eine Ablenkmittel (8) von dem elektrisch oder mechanisch steuerbaren Typ ist.

6. Warmwasserspeicher (1) nach dem vorhergehenden Anspruch, wobei das mindestens eine Ablenkmittel (8) vom Typ EIN/AUS ist, d.h. in der Lage ist, entweder nur offen oder nur geschlossen zu sein.

7. Warmwasserspeicher (1) nach dem vorhergehenden Anspruch 5, wobei das mindestens eine Ablenkmittel (8) vom einstellbaren Typ, d.h. zwischen der Öffnungs- und Schließposition einstellbar ist.

8. Warmwasserspeicher (1) nach einem der vorhergehenden Ansprüche, wobei der eine Vorheizer (4) entlang der Einlassleitung (11) installiert ist und der Einlass (130) der Bypassleitung (13) entlang der Einlassleitung (11) nachgelagert nach dem Vorheizer (4) platziert ist.

9. Warmwasserspeicher (1) nach einem der vorhergehenden Ansprüche 1 bis 7, wobei der eine Vorheizer (4) entlang der Bypassleitung (13) installiert ist und der Einlass (130) der Bypassleitung (13) entlang der Einlassleitung (11) vorgelagert vor dem Einlass (40) des Vorheizers (4) platziert ist.

10. Warmwasserspeicher (1) nach einem der vorhergehenden Ansprüche, wobei der Warmwasserbereiter (1) ferner mindestens eine dritte (5) Zusatzheizvorrichtung umfasst, die entlang der Auslassleitung (12) installiert ist, um als Nachheizer (5) zu dienen.

11. Warmwasserspeicher (1) nach einem oder mehreren der vorhergehenden Ansprüche von 1 bis 10, wobei:
- die erste Hauptheizvorrichtung (2) eine Wärmepumpe oder Mittel umfasst, die die Sonnenenergie oder die geothermische Energie oder dergleichen nutzen;
- die zweite (4) und die dritte Zusatzheizvorrichtung (5) Heizer vom Typ der Durchlauferhitzer umfassen.

12. Warmwasserspeicher (1) nach dem vorhergehenden Anspruch 10 oder 11, wobei die zweite (4) und dritte Zusatzheizvorrichtung (5) und das mindestens eine Ablenkmittel (8) außerhalb des Tanks (10) installiert sind.

13. Warmwasserspeicher (1) nach einem der vorhergehenden Ansprüche, wobei der Warmwasserbereiter (1) ferner versehen ist mit:
- mindestens einem ersten Temperatursensor (61), der in der Nähe der oberen Zone des Tanks (10) angeordnet ist und in der Lage ist, die Temperatur ϑu des Speicherwassers zu erfassen; und/oder
- mindestens einen zweiten Temperatursensor (62), der in der Nähe der unteren Zone des Tanks (10) angeordnet ist und in der Lage ist, die Temperatur ϑd des Speicherwassers zu erfassen; und/oder
- mindestens einen dritten Temperatursensor (63), in der Lage ist, die Temperatur ϑ1 zu erfassen; und/oder
- mindestens einen vierten Temperatursensor (64), der in der Nähe/entlang der Auslassleitung (12) des Tanks (10) angeordnet ist und in der Lage ist, die Temperatur außen ϑo zu erfassen; und/oder
- mindestens einen fünften Temperatursensor (65), der in der Nähe des Auslasses (131) der Bypassleitung (13) angeordnet ist und in der Lage ist, die Temperatur ϑb zu erfassen; und/oder
- mindestens einen sechsten Temperatursensor (66), der in der Nähe/entlang der Auslassleitung (12) des Tanks (10) nachgelagert nach dem Auslassabschnitt (51) des Nachheizers (5), wenn vorgesehen, angeordnet ist und in der Lage ist, mindestens die Temperatur ϑ2 zu erfassen; und/oder
- mindestens einen Durchflusssensor (60), der in der Lage ist, den Wasserstrom, der in den Tank (10) eintritt/aus diesem austritt, zu erfassen.

14. Steuerungsverfahren eines Warmwasserspeichers (1) nach den vorhergehenden Ansprüchen 1 bis 13, wobei das Steuerungsverfahren darauf abzielt, verschiedene Komponenten des Warmwasserbereiters (1), wie mindestens die verschiedenen Heizvorrichtungen des Warmwasserbereiters (1), sowohl mindestens eine Hauptvorrichtung (2) und eine oder mehrere Zusatzvorrichtungen (4, 5) und/oder mindestens die Ablenkmittel (8) zu kontrollieren/koordinieren,
**dadurch gekennzeichnet, dass**
eine oder mehrere Zusatzheizfunktionen durch eine oder mehrere der Zusatzvorrichtungen (4, 5) des Wassers implementiert, das in den Speicher eingeleitet und/oder daraus entnommen wird, wobei die Aktivierung mindestens einer oder mehrerer der Zusatzfunktionen mindestens abhängt von:
- dem Vorliegen oder Nichtvorliegen einer Entnahme; und
- der Regelung von mindestens der Temperatur des zugeführten Wassers ϑo.

15. Steuerungsverfahren eines Warmwasserspeichers (1) nach dem vorhergehenden Anspruch, wobei die Zusatzfunktionen mindestens eine BOOST-Funktion umfassen, die eine zusätzliche Erwärmung im Vergleich zu der Erwärmung, die von der Hauptheizvorrichtung (2) bereitgestellt wird, mindestens des Wassers, das in den Warmwasserbereiter (1) eintritt, durch mindestens die zweite Zusatzheizvorrichtung (4) ermöglicht.

16. Steuerungsverfahren eines Warmwasserspeichers (1) nach dem vorhergehenden Anspruch, wobei der Warmwasserbereiter (1) mit mindestens der BOOST-Funktion ausgestattet sein kann und nur mit dem Vorheizer (4), der entlang der Einlassleitung (11) platziert ist, und einem Ablenkmittel (8) vom Typ ein/aus versehen ist, wobei das Verfahren nach der Überprüfungsphase einer Entnahme (P1) im Falle einer Entnahme vorsieht:
- zu überprüfen, ob die BOOST-Funktion (P2) ausgewählt ist oder nicht;
- wenn die BOOST-Funktion ausgewählt ist, wird die Aktivierung des Vorheizers (4) (P21) vorgesehen,
- wenn die BOOST-Funktion deaktiviert ist, bleibt der Vorheizer (4) ausgeschaltet (P20) und die nächste Phase (P4) wird direkt vorgesehen;
- bei ausgewählter BOOST-Funktion und aktivem Vorheizer (4) wird geprüft (P22), ob die Temperatur ϑb höher als die Einlasstemperatur ϑ1 ist:
- wenn ϑb>ϑ1 (P24) ist, bleibt das Ablenkmittel (8) in "Position 0", wodurch es die Bypassleitung (13) geschlossen hält und die Einlassleitung (11) offen lässt,
- wennϑb nicht >ϑ1 (P23) ist, wird das Ablenkmittel (8) auf "Position 1" (M=1) geschaltet, wodurch es die Bypassleitung (13) öffnet und die Einlassleitung (11) schließt,
- den Wert der Temperatur Tm zu überwachen, indem es ihn mit dem Wert der Temperatur Tset (P4) vergleicht, wobei:
- wenn Tm niedriger als Tset ist, die nächste Phase (P40) vorgesehen ist;
- wenn Tm höher als Tset ist, die Hauptheizvorrichtung (2) ausgeschaltet oder in Standby (P41) bleibt,
- einen Hystereseparameter X von der Solltemperatur Tset zu subtrahieren und ihn mit Tm (P40) zu vergleichen, wobei:
- wenn Tm niedriger als Tset-X ist, die Hauptheizvorrichtung (2) (P42) aktiviert wird,
- wenn Tm höher als Tset-X ist, geprüft wird, ob die Hauptheizvorrichtung (2) während der Entnahme (P43) eingeschaltet ist oder nicht:
- wenn die Hauptheizvorrichtung (2) bereits in Betrieb ist, sie eingeschaltet bleibt, während,
- wenn die Hauptheizvorrichtung (2) ausgeschaltet oder in Standby ist, sie ausgeschaltet oder in Standby bleibt.

17. Steuerungsverfahren eines Warmwasserspeichers (1) nach dem vorhergehenden Anspruch 15 oder 16, wobei der Warmwasserbereiter (1) mit mindestens der BOOST-Funktion ausgestattet sein kann und nur mit dem Vorheizer (4), der entlang der Einlassleitung (11) platziert ist, und einem Ablenkmittel (8) vom Typ ein/aus versehen ist, wobei das Verfahren nach der Überprüfungsphase einer Entnahme (P1) in Abwesenheit einer Entnahme vorsieht:
- den Vorheizer (4) (P3) auszuschalten und ausgeschaltet zu halten;
- den Wert der Temperatur Tm zu überwachen, indem es ihn mit dem Wert der Temperatur Tset (P4) vergleicht, wobei:
- wenn Tm niedriger als Tset ist, die nächste Phase (P40) vorgesehen ist,
- wenn Tm höher als Tset ist, die Hauptheizvorrichtung (2) ausgeschaltet oder in Standby (P41) bleibt;
- einen Hystereseparameter X von der Solltemperatur Tset zu subtrahieren und mit Tm (P40) zu vergleichen, wobei:
- wenn Tm niedriger als Tset-X ist, die Hauptheizvorrichtung (2) (P42) aktiviert wird,
- wenn Tm höher als Tset-X ist, geprüft wird, ob die Hauptheizvorrichtung (2) bei dem Nichtvorhandensein einer Entnahme (P43) eingeschaltet ist oder nicht:
- wenn die Hauptheizvorrichtung (2) bereits in Betrieb ist, sie eingeschaltet bleibt, während,
- wenn die Hauptheizvorrichtung (2) ausgeschaltet oder in Standby ist, ausgeschaltet oder in Standby bleibt.

18. Steuerungsverfahren eines Warmwasserspeichers (1) nach dem vorhergehenden Anspruch 15, wobei der Warmwasserbereiter (1) mit mindestens der BOOST-Funktion ausgestattet sein kann und sowohl mit dem Vorheizer (4), der entlang der Einlassleitung (11) platziert ist, als auch dem Nachheizer (5) und einem Ablenkmittel (8) vom Typ ein/aus versehen ist, wobei das Verfahren nach der Überprüfungsphase einer Entnahme (S1) im Falle einer Entnahme vorsieht:
- zu prüfen, ob die Auslasstemperatur ϑo der Komforttemperatur Tc (S2) entspricht, d.h. ob die Auslasstemperatur ϑo höher ist als die Komforttemperatur Tc (ϑo≥Tc), wenn ja, wird die nächste Phase (S21) des Verfahrens vorgesehen; wenn nicht (S20) wird der Nachheizer (5) aktiviert, um dann mit der nächsten Phase (S21) fortzufahren;
- zu prüfen, ob die BOOST-Funktion eingestellt/ausgewählt ist (S21):
- wenn die BOOST-Funktion ausgewählt ist (S23), wird der Vorheizer (4) aktiviert,
- wenn die BOOST-Funktion deaktiviert ist (S22), bleibt der Vorheizer (4) ausgeschaltet;
- zu prüfen, ob die Temperatur ϑb höher als die Einlasstemperatur ϑ1 (S24) ist:
- wennϑb>ϑ1 (S26) ist, hält das Ablenkmittel (8) die Bypassleitung (13) geschlossen und lässt die Einlassleitung (11) offen,
- wenn ϑb nicht >ϑ1 (S25) ist, öffnet das Ablenkmittel (8) die Bypassleitung (13) und schließt die Einlassleitung (11);
- den Wert der Temperatur Tm zu überwachen, indem es ihn mit dem Wert der Temperatur Tset (S4) vergleicht, wobei:
- wenn Tm niedriger als Tset ist, die nächste Phase (S40) vorgesehen ist,
- wenn Tm höher als Tset ist, die Hauptheizvorrichtung (2) ausgeschaltet oder in Standby (S41) bleibt.
- einen Hystereseparameter X von der Solltemperatur Tset zu subtrahieren und ihn mit Tm (S40) zu vergleichen, wobei:
- wenn Tm niedriger als Tset-X ist, die Hauptheizvorrichtung (2) (S42) aktiviert wird,
- wenn Tm höher als Tset-X ist, geprüft wird, ob die Hauptheizvorrichtung (2) während der Entnahme (S43) eingeschaltet ist oder nicht:
- wenn die Hauptheizvorrichtung (2) bereits in Betrieb ist, bleibt sie eingeschaltet, während,
- wenn die Hauptheizvorrichtung (2) ausgeschaltet oder in Standby ist, sie ausgeschaltet oder in Standby bleibt.

19. Steuerungsverfahren eines Warmwasserspeichers (1) nach dem vorhergehenden Anspruch 15 oder 18, wobei der Warmwasserbereiter (1) mit mindestens der BOOST-Funktion ausgestattet sein kann und sowohl mit dem Vorheizer (4), der entlang der Einlassleitung (11) platziert ist, als auch dem Nachheizer (5) und einem Ablenkmittel (8) vom Typ ein/aus versehen ist, wobei das Verfahren nach der Überprüfungsphase einer Entnahme (S1) in Abwesenheit einer Entnahme vorsieht:
- den Vorheizer (4) und den Nachheizer (5) (S3) abzuschalten und abgeschaltet zu halten;
- den Wert der Temperatur Tm zu überwachen, indem es ihn mit dem Wert der Temperatur Tset (S4) vergleicht, wobei:
- wenn Tm niedriger als Tset ist, die nächste Phase (S40) vorgesehen ist,
- wenn Tm höher als Tset ist, die Hauptheizvorrichtung (2) ausgeschaltet oder in Standby (S41) bleibt;
- einen Hystereseparameter X von der Solltemperatur Tset zu subtrahieren und ihn mit Tm (S40) zu vergleichen, wobei:
- wenn Tm niedriger als Tset-X ist, die Hauptheizvorrichtung (2) (S42) aktiviert wird,
- wenn Tm höher als Tset-X ist, geprüft wird, ob die Hauptheizvorrichtung (2) bei dem Nichtvorhandensein einer Entnahme (S43) eingeschaltet ist oder nicht:
- wenn die Hauptheizvorrichtung (2) bereits in Betrieb ist, sie eingeschaltet bleibt, während,
- wenn die Hauptheizvorrichtung (2) ausgeschaltet oder in Standby ist, sie ausgeschaltet oder in Standby bleibt.

20. Steuerungsverfahren eines Warmwasserspeichers (1) nach dem vorhergehenden Anspruch 15 oder 18, wobei der Warmwasserbereiter (1) mit mindestens der BOOST-Funktion ausgestattet sein kann und sowohl mit dem Vorheizer (4), der entlang der Einlassleitung (11) platziert ist, als auch dem Nachheizer (5) und mit einem Ablenkmittel (8) vom einstellbaren Typ versehen ist, wobei das Verfahren die gleichen Phasen wie das Steuerungsverfahren nach dem vorhergehenden Anspruch 19 vorsieht und sich dadurch unterscheidet, dass im Falle einer Entnahme:
bei der Überprüfung der Temperaturen ϑb und ϑ1 (S24), wenn ϑb nicht >ϑ1 (S25') ist, das Ablenkmittel (8) mindestens teilweise die Bypassleitung (13) öffnet.

21. Steuerungsverfahren eines Warmwasserspeichers (1) nach dem vorhergehenden Anspruch 15 oder 18, wobei der Warmwasserbereiter (1) mit mindestens der BOOST-Funktion ausgestattet sein kann und sowohl mit dem Vorheizer (4), der entlang der Bypassleitung (13) platziert ist, als auch dem Nachheizer (5) und einem Ablenkmittel (8) vom einstellbaren Typ versehen ist, wobei das Verfahren die gleichen Phasen wie das Steuerungsverfahren nach dem vorhergehenden Anspruch 19 vorsieht und sich dadurch unterscheidet, dass im Falle einer Entnahme:
- durch Kontrollieren, ob die BOOST-Funktion eingestellt/ausgewählt ist (S21):
- wenn die BOOST-Funktion ausgewählt ist, die Aktivierung des Vorheizers (4) und die vollständige Öffnung des Ablenkmittels (8) vorgesehen ist;
- durch Kontrollieren, ob die Temperatur ϑb höher als die Einlasstemperatur ϑ1 (S24) ist:
- wennϑb nicht >ϑ1 (S25') ist, das Ablenkmittel (8) mindestens teilweise die Bypassleitung (13) öffnet;
- wenn ϑb>ϑ1 ist, das Ablenkmittel (8) die Bypassleitung (13) schließt oder geschlossen hält und der Vorheizer (4) ausgeschaltet oder auf Standby (S26') gestellt wird.

## Revendications

1. Chauffe-eau à accumulation (1) comprenant au moins un dispositif de chauffage, au moins un réservoir de stockage (10) dans lequel l'eau est stockée et chauffée, au moins une unité de commande et de gestion capable de commander ledit au moins un dispositif de chauffage, au moins un conduit d'entrée (11) par lequel l'eau peut être introduite dans ledit réservoir (10), au moins un conduit de sortie (12) par lequel l'eau peut être envoyée/tirée dudit réservoir (10),
dans lequel
il comprend au moins deux dispositifs de chauffage, dont au moins un dispositif de chauffage principal (2) et au moins un second dispositif de chauffage auxiliaire (4) adapté pour agir en tant que préchauffeur (4), et dans lequel
ledit chauffe-eau (1) comprend au moins un conduit de dérivation (13) capable de dévier, entièrement ou partiellement, le flux d'eau entrant dans ledit réservoir (10) afin de le guider et de l'acheminer dans une zone dudit réservoir (10) placé à une hauteur supérieure à la section de sortie (110) dudit conduit d'entrée (11), ledit conduit de dérivation (13) s'étendant entre le conduit d'entrée (11) auquel il est raccordé, et la zone dudit réservoir (10) où il évacue/introduit l'eau d'appoint, ledit conduit de dérivation (13) étant conformé de manière à comprendre :
- au moins une entrée (130) reliée audit conduit d'entrée (11) ;
- au moins une sortie (131) disposée à l'intérieur dudit réservoir (10) ;
ledit conduit de dérivation (13) prévoit au moins une partie de sortie (134) qui se développe et est logée à l'intérieur dudit réservoir (10) et sur laquelle ladite au moins une sortie (131) est obtenue/placée,
**caractérisé en ce que** ladite au moins une sortie (131) dudit conduit de dérivation (13) est disposée entre la section de sortie (110) dudit conduit d'entrée (11) et la section d'entrée (120) dudit conduit de sortie (12), à une distance h de la section d'entrée (120) dudit conduit de sortie (12).

2. Chauffe-eau à accumulation (1) selon la revendication précédente, dans lequel ladite partie de sortie (134) est disposée verticalement à l'intérieur dudit réservoir (10) et s'étend d'une zone à proximité du fond dudit réservoir (10) à une zone médiane ou supérieure du même réservoir (10) selon le développement longitudinal de celui-ci.

3. Chauffe-eau à accumulation (1) selon la revendication précédente, dans lequel ledit conduit de dérivation (13) est formé de manière à pouvoir assurer :
- au moins une première partie (133), disposée à l'extérieur dudit réservoir (10), sur laquelle ladite entrée (130) est obtenue/placée, et
- au moins une deuxième partie, disposée à l'intérieur du réservoir (10), adaptée pour définir ladite partie de sortie (134).

4. Chauffe-eau à accumulation (1) selon toute revendication précédente, dans lequel ledit chauffe-eau (1) est en outre pourvu d'au moins un moyen de dérivation (8) adapté pour relier ledit conduit de dérivation (13) audit conduit d'entrée (11).

5. Chauffe-eau à accumulation (1) selon l'une quelconque des revendications précédentes, dans lequel ledit au moins un moyen de dérivation (8) est du type contrôlable électriquement ou mécaniquement.

6. Chauffe-eau à accumulation (1) selon la revendication précédente, dans lequel ledit au moins un moyen de dérivation (8) est du type ON/OFF, c'est-à-dire capable d'être soit uniquement ouvert, soit uniquement fermé.

7. Chauffe-eau à accumulation (1) selon la revendication précédente 5, dans lequel ledit au moins un moyen de dérivation (8) est du type réglable, c'est-à-dire enregistrable entre la position d'ouverture et la position de fermeture.

8. Chauffe-eau à accumulation (1) selon toute revendication précédente, dans lequel ledit au moins un préchauffeur (4) est installé le long dudit conduit d'entrée (11) et ladite entrée (130) dudit conduit de dérivation (13) est placée le long dudit conduit d'entrée (11), en aval dudit préchauffeur (4).

9. Chauffe-eau à accumulation (1) selon l'une quelconque des revendications précédentes 1 à 7, dans lequel ledit au moins un préchauffeur (4) est installé le long dudit conduit de dérivation (13) et ladite entrée (130) dudit conduit de dérivation (13) est placée le long dudit conduit d'entrée (11), en amont de l'entrée (40) dudit préchauffeur (4).

10. Chauffe-eau à accumulation (1) selon toute revendication précédente, dans lequel ledit chauffe-eau (1) comprend en outre au moins un troisième (5) dispositif de chauffage auxiliaire, installé le long dudit conduit de sortie (12) de manière à agir comme un post-réchauffeur (5).

11. Chauffe-eau à accumulation (1) selon une ou plusieurs des revendications précédentes de 1 à 10, dans lequel :
- ledit premier dispositif de chauffage principal (2) comprend une pompe à chaleur ou des moyens qui utilisent l'énergie solaire ou l'énergie géothermique ou autre ;
- les deuxième (4) et troisième dispositifs de chauffage auxiliaire (5) comprennent des réchauffeurs du type instantané.

12. Chauffe-eau à accumulation (1) selon la revendication précédente 10 ou 11, dans lequel lesdits deuxième (4) et troisième dispositifs de chauffage auxiliaire (5) et ledit au moins un moyen de dérivation (8) sont installés à l'extérieur dudit réservoir (10).

13. Chauffe-eau à accumulation (1) selon toute revendication précédente, dans lequel ledit chauffe-eau (1) est en outre équipé de :
- au moins un premier capteur de température (61) placé à proximité de la zone supérieure dudit réservoir (10) et capable de détecter la température ϑu de l'eau de stockage ; et/ou
- au moins un second capteur de température (62) disposé à proximité de la zone inférieure dudit réservoir (10) et capable de détecter la température ϑd de l'eau du stockage ; et/ou
- au moins un troisième capteur de température (63) capable de détecter la température ϑ1 ; et/ou
- au moins un quatrième capteur de température (64) disposé à proximité/le long dudit conduit de sortie (12) dudit réservoir (10), et capable de détecter la température à l'extérieur de ϑo ; et/ou
- au moins un cinquième capteur de température (65) disposé à proximité de la sortie (131) dudit conduit de dérivation (13) et capable de détecter la température ϑb ; et/ou
- au moins un sixième capteur de température (66) disposé à proximité/le long dudit conduit de sortie (12) dudit réservoir (10), en aval de la section de sortie (51) dudit post-réchauffeur (5) lorsqu'il est prévu, et capable de détecter au moins la température ϑ2 ; et/ou
- au moins un capteur de débit (60) capable de détecter le débit d'eau entrant ou sortant dudit réservoir (10).

14. Procédé de gestion d'un chauffe-eau à accumulation (1) selon les revendications précédentes 1 à 13, ledit procédé de gestion étant destiné à contrôler/coordonner différents composants dudit chauffe-eau (1) tels qu'au moins les différents dispositifs de chauffage dudit chauffe-eau (1), à la fois ledit au moins un dispositif principal (2) et un ou plusieurs desdits dispositifs auxiliaires (4, 5), et/ou au moins lesdits moyens de dérivation (8),
se **caractérise par le fait que**
ledit procédé de gestion met en œuvre une ou plusieurs fonctions de chauffage supplémentaires, par un ou plusieurs desdits dispositifs auxiliaires (4, 5), de l'eau introduite et/ou retirée du stockage, l'activation d'au moins une ou plusieurs desdites fonctions supplémentaires dépendant d'au moins :
- la présence ou non d'un retrait ; et
- le contrôle au moins de la température de l'eau fournie ϑo.

15. Procédé de gestion d'un chauffe-eau à accumulation (1) selon la revendication précédente, dans lequel lesdites fonctions supplémentaires comprennent au moins une fonction BOOST, qui permet un chauffage supplémentaire, par rapport à celui fourni par ledit dispositif de chauffage principal (2), au moins de l'eau entrant dans ledit chauffe-eau (1) par au moins ledit second dispositif de chauffage auxiliaire (4).

16. Procédé de gestion d'un chauffe-eau à accumulation (1) selon la revendication précédente, dans lequel ledit chauffe-eau (1) peut être équipé au moins de ladite fonction BOOST et est pourvu uniquement dudit préchauffeur (4), placé le long dudit conduit d'entrée (11), et d'un moyen de dérivation (8) de type on/off, où, suite à la phase de vérification d'un soutirage (P1), en cas de soutirage, ledit procédé prévoit :
- en vérifiant si la fonction BOOST (P2) est sélectionnée ou non :
- si la fonction BOOST est sélectionnée, l'activation du préchauffeur (4) (P21) est assurée,
- si la fonction BOOST est désactivée, le préchauffeur (4) reste éteint (P20) et la phase suivante (P4) est assurée directement ;
- lorsque la fonction BOOST est sélectionnée et que le préchauffeur (4) est actif, la température ϑb est vérifiée (P22) pour déterminer si elle est supérieure à la température d'entrée ϑ1 :
- si ϑb>ϑ1 (P24), ledit moyen de dérivation (8) reste en « position 0 » en maintenant fermé ledit conduit de dérivation (13) et en laissant ouvert ledit conduit d'entrée (11),
- si ϑb n'est pas >ϑ1 (P23), ledit moyen de dérivation (8) est mis en « position 1 » (M=1) en ouvrant ledit conduit de dérivation (13) et en fermant ledit conduit d'entrée (11).
- contrôler la valeur de la température Tm en la comparant à la valeur de la température Tset (P4), où :
- si Tm est inférieure à Tset, la phase suivante (P40) est fournie ;
- si Tm est supérieure à Tset, le dispositif de chauffage principal (2) reste éteint ou en veille (P41).
- en soustrayant un paramètre d'hystérésis X de ladite température de consigne Tset et en le comparant à ladite Tm (P40), où :
- si Tm est inférieure à Tset-X, ledit dispositif de chauffage principal (2) (P42) est activé,
- si Tm est supérieure à Tset-X, il est prévu de vérifier si ledit dispositif de chauffage principal (2) est activé ou non pendant le soutirage (P43) :
- si ledit dispositif de chauffage principal (2) est déjà en service, il reste allumé, tandis que
- si ledit dispositif de chauffage principal (2) est éteint ou en veille, il reste éteint ou en veille.

17. Procédé de gestion d'un chauffe-eau à accumulation (1) selon la revendication précédente 15 ou 16, dans lequel ledit chauffe-eau (1) peut être équipé au moins de ladite fonction BOOST et est pourvu uniquement dudit préchauffeur (4), placé le long dudit conduit d'entrée (11), et d'un moyen de dérivation (8) de type on/off, où, suite à la phase de vérification d'un soutirage (P1), en l'absence d'un soutirage, ledit procédé prévoit :
- mettre et maintenir hors tension ledit préchauffeur (4) (P3) ;
- contrôler la valeur de la température Tm en la comparant à la valeur de la température Tset (P4), où :
- si Tm est inférieure à Tset, la phase suivante (P40) est fournie,
- si Tm est supérieure à Tset, le dispositif de chauffage principal (2) reste éteint ou en veille (P41) ;
- en soustrayant un paramètre d'hystérésis X de ladite température de consigne Tset et en le comparant à ladite Tm (P40), où :
- si Tm est inférieure à Tset-X, ledit dispositif de chauffage principal (2) (P42) est activé,
- si Tm est supérieure à Tset-X, il est prévu de vérifier si ledit dispositif de chauffage principal (2) est activé ou non en l'absence d'un soutirage (P43) :
- si ledit dispositif de chauffage principal (2) est déjà en service, il reste allumé, tandis que
- si ledit dispositif de chauffage principal (2) est éteint ou en veille, il reste éteint ou en veille.

18. Procédé de gestion d'un chauffe-eau à accumulation (1) selon la revendication précédente 15, dans lequel ledit chauffe-eau (1) peut être équipé au moins de ladite fonction BOOST et est pourvu à la fois dudit préchauffeur (4), placé le long dudit conduit d'entrée (11), et dudit post-réchauffeur (5) et d'un moyen de dérivation (8) de type on/off, dans lequel, suite à la phase de vérification d'un soutirage (S1), en cas de soutirage ledit procédé prévoit :
- vérifier si la température de sortie ϑo respecte la température de confort Tc (S2), c'est-à-dire si ladite température de sortie ϑo est supérieure à ladite température de confort Tc (ϑo≥Tc), dans l'affirmative, la phase suivante (S21) de la méthode est prévue ; dans la négative (S20), ledit post-réchauffeur (5) est activé pour passer ensuite à ladite phase suivante (S21) ;
- vérifier si ladite fonction BOOST est réglée/sélectionnée (S21) :
- si la fonction BOOST est sélectionnée (S23), le préchauffeur (4) est activé,
- si la fonction BOOST est désactivée (S22), le préchauffeur (4) reste éteint ;
- vérifier si la température ϑb est supérieure à la température d'entrée ϑ1 (S24) :
- si ϑb>ϑ1 (S26), ledit moyen de dérivation (8) maintient fermé ledit conduit de dérivation (13) et laisse ouvert ledit conduit d'entrée (11),
- si ϑb n'est pas >ϑ1 (S25), ledit moyen de dérivation (8) ouvre ledit conduit de dérivation (13) et ferme ledit conduit d'entrée (11) ;
- contrôler la valeur de la température Tm en la comparant à la valeur de la température Tset (S4), où :
- si Tm est inférieure à Tset, la phase suivante (S40) est fournie ;
- si Tm est supérieure à Tset, le dispositif de chauffage principal (2) reste éteint ou en veille (S41).
- en soustrayant un paramètre d'hystérésis X de ladite température de consigne Tset et en le comparant à ladite Tm (S40), où :
- si Tm est inférieure à Tset-X, ledit dispositif de chauffage principal (2) (S42) est activé,
- si Tm est supérieure à Tset-X, il est prévu de vérifier si ledit dispositif de chauffage principal (2) est activé ou non pendant le soutirage (S43) :
- si ledit dispositif de chauffage principal (2) est déjà en service, il reste allumé, tandis que
- si ledit dispositif de chauffage principal (2) est éteint ou en veille, il reste éteint ou en veille.

19. Procédé de gestion d'un chauffe-eau à accumulation (1) selon la revendication précédente 15 ou 18, dans lequel ledit chauffe-eau (1) peut être équipé au moins de ladite fonction BOOST et est pourvu à la fois dudit préchauffeur (4), placé le long dudit conduit d'entrée (11), et dudit post-réchauffeur (5) et d'un moyen de dérivation (8) de type on/off, où, suite à la phase de vérification d'un soutirage (S1), en l'absence d'un soutirage, ledit procédé prévoit :
- éteindre et maintenir éteint ledit préchauffeur (4) et ledit post-réchauffeur (5) (S3) ;
- contrôler la valeur de la température Tm en la comparant à la valeur de la température Tset (S4), où :
- si Tm est inférieure à Tset, la phase suivante (S40) est fournie,
- si Tm est supérieure à Tset, le dispositif de chauffage principal (2) reste éteint ou en veille (S41) ;
- en soustrayant un paramètre d'hystérésis X de ladite température de consigne Tset et en le comparant à ladite Tm (S40), où :
- si Tm est inférieure à Tset-X, ledit dispositif de chauffage principal (2) (S42) est activé,
- si Tm est supérieure à Tset-X, il est prévu de vérifier si ledit dispositif de chauffage principal (2) est activé ou non en l'absence d'un soutirage (S43) :
- si ledit dispositif de chauffage principal (2) est déjà en service, il reste allumé, tandis que
- si ledit dispositif de chauffage principal (2) est éteint ou en veille, il reste éteint ou en veille.

20. Procédé de gestion d'un chauffe-eau à accumulation (1) selon la revendication précédente 15 ou 18, dans lequel ledit chauffe-eau (1) peut être équipé au moins de ladite fonction BOOST et est pourvu à la fois dudit préchauffeur (4), placé le long dudit conduit d'entrée (11), et dudit post-réchauffeur (5), et d'un moyen de dérivation (8) de type réglable, ledit procédé prévoyant les mêmes phases que le procédé de gestion selon la revendication précédente 19 et en diffère en ce que, en cas de soutirage, le chauffe-eau à accumulation (1) est équipé d'un moyen de dérivation (8) de type réglable :
lors du contrôle des températures ϑb et ϑ1 (S24), si ϑb n'est pas >ϑ1 (S25'), ledit moyen de dérivation (8) ouvre, au moins partiellement, ledit conduit de dérivation (13).

21. Procédé de gestion d'un chauffe-eau à accumulation (1) selon la revendication précédente 15 ou 18, dans lequel ledit chauffe-eau (1) peut être équipé au moins de ladite fonction BOOST et est pourvu à la fois dudit préchauffeur (4), placé le long dudit conduit de dérivation (13), et dudit post-réchauffeur (5), et d'un moyen de dérivation (8) de type réglable, ledit procédé prévoyant les mêmes phases que le procédé de gestion selon la revendication précédente 19 et en diffère en ce que, en cas de soutirage :
- en contrôlant si ladite fonction BOOST est activée/sélectionnée (S21) :
- si la fonction BOOST est sélectionnée, l'activation du préchauffeur (4) et l'ouverture complète du déviateur (8) sont assurées ;
- en contrôlant si la température ϑb est supérieure à la température d'entrée ϑ1 (S24) :
- si ϑb n'est pas >ϑ1 (S25'), ledit moyen de dérivation (8) ouvre, au moins partiellement, ledit conduit de dérivation (13) ;
- si ϑb>ϑ1, ledit moyen de dérivation (8) ferme ou maintient fermé ledit conduit de dérivation (13) et ledit préchauffeur (4) est éteint ou mis en veille (S26').
